(19) **Europäisches Patentamt**
**European Patent Office**
**Office européen des brevets**

(11) **EP 3 504 616 B1**

(12) **EUROPÄISCHE PATENTSCHRIFT**

(45) Veröffentlichungstag und Bekanntmachung des Hinweises auf die Patenterteilung:
**21.10.2020 Patentblatt 2020/43**

(51) Int Cl.:
***G06F 7/72*** *(2006.01)*

(21) Anmeldenummer: **17754719.7**

(86) Internationale Anmeldenummer:
**PCT/EP2017/071036**

(22) Anmeldetag: **21.08.2017**

(87) Internationale Veröffentlichungsnummer:
**WO 2018/036967 (01.03.2018 Gazette 2018/09)**

(54) **MODUL UND VERFAHREN ZUR ABGESICHERTEN BERECHNUNG VON MATHEMATISCHEN OPERATIONEN**

MODULE AND METHOD FOR THE SECURED COMPUTATION OF MATHEMATICAL OPERATIONS

MODULE ET PROCÉDÉ DE CALCUL SÉCURISÉ D'OPÉRATIONS MATHÉMATIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.08.2016 DE 102016115609**

(43) Veröffentlichungstag der Anmeldung:
**03.07.2019 Patentblatt 2019/27**

(73) Patentinhaber: **Bundesrepublik Deutschland, Vertreten Durch Das Bundesministerium Des Innern, Vertreten Durch Das Bundesamt Für Sicherheit 53175 Bonn (DE)**

(72) Erfinder:
• **GEBHARDT, Ute**
**53424 Remagen (DE)**
• **ULLMANN, Markus**
**53489 Sinzig (DE)**
• **WIESCHEBRINK, Christian**
**53129 Bonn (DE)**

(74) Vertreter: **Valvoda, Jakob Boehmert & Boehmert Anwaltspartnerschaft mbB Pettenkoferstrasse 22 80336 München (DE)**

(56) Entgegenhaltungen:
**US-A1- 2012 008 780**

• **NEGRE CHRISTOPHE ET AL: "New Parallel Approaches for Scalar Multiplication in Elliptic Curve over Fields of Small Characteristic", IEEE TRANSACTIONS ON COMPUTERS, IEEE, USA, Bd. 64, Nr. 10, 1. Oktober 2015 (2015-10-01), Seiten 2875-2890, XP011668142, ISSN: 0018-9340, DOI: 10.1109/TC.2015.2389817 [gefunden am 2015-09-03]**
• **ZHIMIN CHEN ET AL: "Using Virtual Secure Circuit to Protect Embedded Software from Side-Channel Attacks", IEEE TRANSACTIONS ON COMPUTERS, Bd. 62, Nr. 1, 1. Januar 2013 (2013-01-01) , Seiten 124-136, XP055418543, USA ISSN: 0018-9340, DOI: 10.1109/TC.2011.225**
• **KANNIAH U S ET AL: "Multi-threading elliptic curve cryptosystems", TELECOMMUNICATIONS AND MALAYSIA INTERNATIONAL CONFERENCE ON COMMUNICATIONS, 2007. ICT-MICC 2007. IEEE INTERNATIONAL CONFERENCE ON, IEEE, PISCATAWAY, NJ, USA, 14. Mai 2007 (2007-05-14), Seiten 134-139, XP031228718, ISBN: 978-1-4244-1093-4**

# EP 3 504 616 B1

**Beschreibung**

TECHNISCHES GEBIET

Die vorliegende Erfindung betrifft ein elektronisches Modul und ein Verfahren zur Berechnung einer mathematischen Operation mit einer Vielzahl unterschiedlich konfigurierter Berechnungseinheiten. Die vorliegende Erfindung kann eine Verwendung des elektronischen Moduls oder des Verfahrens in einem sicherheitskritischen Umfeld, beispielsweise im Bereich der Kryptografie, betreffen.

STAND DER TECHNIK

Der Einsatz von Rechnern und Recheneinheiten oder Modulen zur Berechnung mathematischer Operationen stellt einen unverzichtbaren Bestandteil von gängigen elektronischen Systemen dar. Hierbei ist die flexible Konfigurierbarkeit der Recheneinheiten ein leistungsfähiges Mittel, um beliebige mathematische Operationen schnell berechnen zu lassen. Komplexe oder oft wiederkehrende mathematische Operationen können ferner auf spezialisierten Recheneinheiten effizient berechnet werden. Da die Berechnung im Inneren der Recheneinheit erfolgt und somit von außen nicht unmittelbar einsehbar ist, kann ohne weiteres Wissen über den Aufbau und die Konfiguration der Recheneinheit bis auf die von der Recheneinheit ausgegebenen Ergebnisse nicht direkt auf die Berechnung und die hierbei auftretenden (internen) Zustände oder verwendeten Parameter rückgeschlossen werden. Entsprechende Recheneinheiten können somit verwendet werden, um einen direkten Zugriff auf das darin implementierte Berechnungsverfahren zu verhindern oder zumindest zu erschweren. Rückschlüsse auf das Berechnungsverfahren und die verwendeten Daten sind jedoch nicht gänzlich ausgeschlossen. So kann beispielsweise mittels Reverse Engineering ermittelt werden, welche Berechnungsverfahren in einer Recheneinheit oder einem Modul vorgesehen sind, und durch ein Abgreifen der Ein- und Ausgabeparameter kann zumindest teilweise auf die verwendeten Daten rückgeschlossen werden.

Im Bereich der Kryptografie können zudem einzelne Parameter, beispielsweise geheime Schlüsseldaten oder andere vertrauliche Daten, lohnende Angriffsziele sein. Hierzu können Methoden der Hardware-Kryptoanalyse verwendet werden, um die von der Recheneinheit oder von dem Modul bearbeiteten kritischen oder vertraulichen Daten zu ermitteln.

Beispielsweise können durch die differentielle Verbrauchsanalyse (*differential power analysis,* DPA), basierend auf einer statistischen Auswertung einer größeren Anzahl von Energieverbrauchsmessungen an einer Recheneinheit, beispielsweise einem Kryptogerät, einer Smartcard oder Ähnlichen, Rückschlüsse auf verwendete vertrauliche Parameter gezogen werden.

Eine weitere Angriffsmethode stellen Template-Angriffe dar. Hierbei wird angenommen, dass einem Angreifer ein Kryptogerät zur Verfügung steht, das baugleich zum Zielgerät ist und das einen kryptografischen Algorithmus für beliebige Schlüssel und Eingabedaten ausführen kann. Dies erlaubt es dem Angreifer, den Energieverbrauch des Gerätes relativ genau zu charakterisieren, woraus dann wieder Rückschlüsse auf einen vertraulichen Parameter gezogen werden können.

Christophe Negre und Jean-Marc Robert: "New Parallel Approaches for Scalar Multiplication in Elliptic Curves over Fields of Small Characteristics" IEEE Transactions on Computers, 64(10), 2015 offenbart zwei Strategien für eine parallele Implementierung von skalaren Multiplikationen auf elliptischen Kurven. Ein darin vorgeschlagener adaptierter Montgomery-Algorithmus kann parallel zum ursprünglichen Montgomery-Algorithmus ausgeführt werden, um Teile der skalaren Multiplikation parallel zu berechnen.

Zhimin Chen et al.: "Using Virtual Secure Circuit to Protect Embedded Software from Side-Channel Attacks", IEEE Transactions on Computers, 62(1), 2013 behandelt die Problematik von Seitenkanalangriffen (Side-Channel Attacks, SCAs), welche zum Brechen von kryptographischen Implementierungen verwendet werden können. Als Softwaregegenmaßnahme wird vorgeschlagen, SCAs mit Hilfe von virtuellen sicheren Schaltkreisen (Virtual Secure Circuit, VSC) abzuwehren.

US 2012/008780 A1 geht auf skalare Multiplikationen mit elliptischen Kurven ein. Diese können verwendet werden, um skalare Multiplikationen von privaten Schlüsseln gegen Leistungsanalyseangriffe abzusichern.

ZUSAMMENFASSUNG

Der vorliegenden Erfindung liegt daher die Aufgabe zugrunde, eine Recheneinheit oder ein Modul und ein Berechnungsverfahren für eine mathematische Operation bereitzustellen, welche keine oder nur unter erschwerten Umständen Rückschlüsse auf Details der Berechnung der mathematischen Operation zulassen.

Die vorgenannte Aufgabe wird durch ein elektronisches Modul gemäß dem Hauptanspruch und ein Verfahren zur Berechnung einer mathematischen Operation gemäß dem nebengeordneten Anspruch gelöst. Bevorzugte Ausführungsformen sind in den abhängigen Ansprüchen definiert.

2

Erfindungsgemäß ist ein elektronisches Modul vorgesehen, welches eine Vielzahl von Berechnungseinheiten zur Berechnung einer mathematischen Operation für einen Satz von Parametern umfasst, wobei jede Berechnungseinheit eingerichtet ist, die mathematische Operation mit dem Satz von Parametern nach einem Berechnungsverfahren zu berechnen, und wobei sich das Berechnungsverfahren bei mindestens zwei Berechnungseinheiten aus der Vielzahl von Berechnungseinheiten unterscheidet.

Die unterschiedlichen Berechnungseinheiten berechnen die mathematische Operation für den Satz von Parametern derart, dass die jeweiligen Ergebnisse übereinstimmen, das Berechnungsverfahren jedoch abweicht. Somit umfasst das elektronische Modul eine redundante Anzahl von Berechnungseinheiten zur Berechnung der mathematischen Operationen, von denen sich zumindest zwei Berechnungseinheiten in der Art der Berechnung der mathematischen Operation unterscheiden, indem sie ein abweichendes Berechnungsverfahren implementieren.

Durch das Vorsehen von unterschiedlichen Berechnungseinheiten in dem elektronischen Modul zur Berechnung derselben mathematischen Operation ist eine zusätzliche Varianz der Berechnung gegeben, sodass wiederholte Berechnungen für denselben Satz von Parametern zwar zum selben Ergebnis führen, diese Berechnungen jedoch nicht zwingend von derselben Berechnungseinheit des Moduls durchgeführt werden, sodass Angriffe, beispielsweise mittels gängiger Hardware-Kryptoanalyse, unmöglich oder zumindest deutlich erschwert werden.

Das elektronische Modul kann mindestens einen Eingang oder eine Eingabeeinheit zur Eingabe von einem oder mehreren Parametern aus dem Satz von Parametern umfassen. Dementsprechend kann der Satz von Parametern einen oder mehrere Parameter umfassen und die mathematische Operation kann auf dem einen oder den mehreren Parametern berechnet werden. Ferner kann mindestens ein Parameter aus dem Satz von Parametern in einem Speicher des elektronischen Moduls gespeichert sein. Beispielsweise kann ein geheimer Schlüssel in einem abgesicherten Speicher des elektronischen Moduls gespeichert oder zwischengespeichert sein. Teile des (zwischen-)gespeicherten Parameters oder der gesamte Parameter können bei der Berechnung der mathematischen Operation verwendet werden. Alternativ oder zusätzlich kann auch ein Parameter, der den Wertebereich von mindestens einem weiteren Parameter oder der übrigen Parameter beschreibt, in einem Speicher des elektronischen Moduls oder in dem abgesicherten Speicher gespeichert sein. Beispielsweise kann der gespeicherte Parameter die Größe eines endlichen Körpers angeben, auf dem oder auf dessen Zahlen die mathematische Operation berechnet wird.

Das elektronische Modul kann ferner einen Ausgang oder eine Ausgabeeinheit umfassen, um das von der Vielzahl von Berechnungseinheiten berechnete Ergebnis der mathematischen Operation aus dem Satz von Parametern bereitzustellen. Der Ausgang oder die Ausgabeeinheit kann hierbei eine Schnittstelle darstellen, sodass das Ergebnis aus dem elektronischen Modul ausgelesen werden kann. Ferner kann der Ausgang oder die Ausgabeeinheit das Ergebnis zu weiteren Komponenten des elektronischen Moduls zur weiteren Verwendung und/oder Verarbeitung weiterleiten.

In einer bevorzugten Ausführungsform implementiert jede Berechnungseinheit das jeweilige Berechnungsverfahren als eine Abfolge von einem oder mehreren Berechnungsschritten. Vorzugsweise unterscheiden sich die jeweiligen Berechnungsverfahren der mindestens zwei unterschiedlichen Berechnungseinheiten in mindestens einem Berechnungsschritt. Dementsprechend ergibt sich für eine Berechnung der mathematischen Operation für einen identischen Satz von Parametern eine andere Abfolge von Berechnungsschritten, je nachdem, welche Berechnungseinheit zur Berechnung der mathematischen Operation herangezogen wird. Somit würde eine Hardware-Kryptoanalyse desselben elektronischen Moduls auch für identische Sätze von Parametern zu anderen Messergebnissen führen, wodurch Rückschlüsse auf die bei der Berechnung verwendeten Parameter zumindest deutlich erschwert würden.

In einer weiteren Ausführungsform umfasst das elektronische Modul eine Auswahleinheit, welche eingerichtet ist, eine Berechnungseinheit aus der Vielzahl von Berechnungseinheiten zur Berechnung der mathematischen Operation auszuwählen. Vorzugsweise wird die mindestens eine weitere Berechnungseinheit randomisiert ausgewählt. Das elektronische Modul kann vorzugsweise eingerichtet sein, den Satz von Parametern an die ausgewählte Berechnungseinheit zu übergeben und ein von der ausgewählten Berechnungseinheit berechnetes Ergebnis der mathematischen Operation bereitzustellen. Das elektronische Modul kann sowohl eingerichtet sein, einen oder mehrere über einen Eingang oder eine Eingabeeinheit eingegebene Parameter an die ausgewählte Berechnungseinheit zu übergeben, als auch auf dem elektronischen Modul gespeicherte Parameter an die ausgewählte Berechnungseinheit zu übergeben. Darüber hinaus können sowohl die eingegebenen als auch die gespeicherten Parameter in einem Speicher zwischengespeichert sein, und die ausgewählte Berechnungseinheit kann die Parameter entweder aus dem Zwischenspeicher oder aus dem abgesicherten Speicher des elektronischen Moduls zur Berechnung der mathematischen Operation abrufen. Die Auswahl der Berechnungseinheit durch die Auswahleinheit erhöht die Varianz der zur Berechnung der mathematischen Operation verwendeten Berechnungsverfahren, sodass eine Hardware-Kryptoanalyse unmöglich oder zumindest deutlich erschwert wird.

In einer weiteren Ausführungsform weist die Auswahleinheit einen Zufallszahlengenerator oder Pseudozufallszahlengenerator auf und ist eingerichtet, die Berechnungseinheit randomisiert auszuwählen. Vorzugsweise ist die Auswahleinheit eingerichtet, die Berechnungseinheit als Reaktion auf eine Eingabe eines Satzes von Parametern auszuwählen. Somit kann die Auswahleinheit als Reaktion auf einen oder mehrere eingegebene Parameter zur Laufzeit (pseudo-)randomisiert mindestens eine Berechnungseinheit auswählen. Ein Nutzer des elektronischen Moduls kann somit gar nicht oder nur stark erschwert nachvollziehen, welche Berechnungseinheit aktuell zur Berechnung der mathematischen Operation vorgesehen ist. Der Zufallszahlengenerator oder Pseudozufallszahlengenerator und die randomisierte Auswahl können die Randomisierung deterministisch oder nichtdeterministisch durchführen. Beispielsweise kann ein physikalischer Zufallszahlengenerator verwendet werden, der auf physikalischen Hardware-Effekten beruht, beispielsweise auf Zuständen, Signalen oder Impulsen von elektronischen Bauteilen des elektronischen Moduls. Ferner kann der Pseudozufallszahlengenerator als Hardware oder in Software, beispielsweise mit Schieberegistern, implementiert sein.

In einer bevorzugten Ausführungsform umfasst das elektronische Modul eine Schnittstelle zur Auswahl mindestens eines Berechnungsmoduls zur Berechnung der mathematischen Operation. Über diese Schnittstelle kann das elektronische Modul von einer externen Entität, beispielsweise einem Lesegerät oder einer Rechenvorrichtung, bei der Auswahl eines Berechnungsmoduls zur Berechnung der mathematischen Operation beeinflusst werden. Beispielsweise kann über die Schnittstelle die randomisierte Auswahl des Berechnungsmoduls gesteuert werden, um festzulegen, ob und in welcher Art eine Randomisierung erfolgen soll. Darüber hinaus kann über die Schnittstelle ebenfalls eine konkrete Berechnungseinheit zur Berechnung der mathematischen Operation ausgewählt werden. Hierdurch wird eine flexible Verwendung des elektronischen Moduls ermöglicht, die trotz einer möglichen Verringerung der Varianz bei der Auswahl der Berechnungseinheit vorteilhaft sein kann. Das elektronische Modul kann jedoch weitere Hardware-Mittel aufweisen, um je nach gewünschtem Sicherheitsniveau und der Art von verwendeten Daten einen Zugriff auf auf dem elektronischen Modul gespeicherte Daten einzuschränken oder gänzlich zu unterbinden. So könnte beispielsweise über die Schnittstelle eine konkrete Berechnungseinheit ausgewählt sein; eine solche Konfiguration könnte jedoch erfordern, dass ein zusätzlicher Parameter, der sonst aus einem Sicherheitsspeicher des elektronischen Moduls abgerufen werden kann, von außen eingegeben werden muss. Eine derartige Konfiguration ermöglicht die Verwendung des elektronischen Moduls zur effizienten Berechnung der mathematischen Operation auch zu Testzwecken oder in weniger sicherheitskritischen Bereichen.

In einer weiteren Ausführungsform wird die mathematische Operation rekursiv berechnet. Vorzugsweise wird hierzu mindestens ein Parameter aus dem Satz von Parametern in eine Vielzahl von Teilstücken zerlegt, und die mathematische Operation wird auf jedem der Teilstücke berechnet, um eine Vielzahl von Teilergebnissen zu erhalten, wobei das Ergebnis der mathematischen Operation wiederum aus der Vielzahl von Teilergebnissen zusammengesetzt wird. Dementsprechend kann auf einer Rekursionsstufe die mathematische Operation in eine Vielzahl von Teilproblemen zerlegt werden, welche wiederum der mathematischen Operation entsprechen, sodass die Vielzahl von Berechnungseinheiten des elektronischen Moduls zur Lösung der Teilprobleme auf der nächsten Rekursionsstufe herangezogen werden kann. Die Rekursion kann in einer Tiefe enden, wenn die einzelnen Parameter nicht mehr in eine Vielzahl von Teilstücken zerlegbar sind, sodass die mathematische Operation direkt auf den Parametern berechnet und das Ergebnis als Teilergebnis für die nächsthöhere Rekursionsstufe zurückgegeben wird. Auf der nächsthöheren Rekursionsstufe werden die Teilergebnisse zum Gesamtergebnis zusammengesetzt, welches wiederum als Teilergebnis für eine weitere höhere Rekursionsstufe dienen kann. Die Art und Tiefe der Rekursion kann hierbei von dem jeweiligen Berechnungsverfahren der aktuell verwendeten Berechnungseinheit abhängen. Die Gesamtberechnung der mathematischen Operation unterscheidet sich somit gänzlich je nach ursprünglich ausgewählter Berechnungseinheit. Werden die Berechnungseinheiten (pseudo-)zufällig ausgewählt, ist die Gesamtberechnung der mathematischen Operation somit nichtdeterministisch.

In einer bevorzugten Ausführungsform zerlegt mindestens eine der Berechnungseinheiten den mindestens einen Parameter in die Vielzahl von Teilstücken. Die mindestens eine Berechnungseinheit kann hierbei die initial oder aktuell ausgewählte Berechnungseinheit sein. Ferner kann das elektronische Modul fest konfiguriert sein, die Zerlegung des mindestens einen Parameters in Teilstücke in einer dedizierten Berechnungseinheit durchzuführen, welche dann die Rekursionstiefe und weitere Berechnungsschritte steuern kann.

In einer weiteren Ausführungsform wird mindestens ein Teilergebnis von mindestens einer weiteren Berechnungseinheit aus der Vielzahl von Berechnungseinheiten, basierend auf mindestens einem der Teilstücke, berechnet. Hierzu kann die Vielzahl von Berechnungseinheiten miteinander gekoppelt sein, entweder direkt oder über die Auswahleinheit des elektronischen Moduls, sodass auf einer Rekursionsstufe eine aktuelle Berechnungseinheit die Zerlegung des mindestens einen Parameters in Teilstücke durchführen kann und die Teilstücke als Parameter an eine weitere Berechnungseinheit leiten kann. Die weitere Berechnungseinheit kann randomisiert oder auf der Grundlage des von der aktuellen Berechnungseinheit verwendeten Berechnungsverfahrens ausgewählt sein. Um einen Mehrfachaufruf einer Berechnungseinheit auf unterschiedlichen Rekursionsstufen zu ermöglichen, kann jede Berechnungseinheit einen lokalen Speicher zur Zwischenspeicherung der aktuellen Rechenergebnisse umfassen. Ferner kann das elektronische Modul oder die Auswahleinheit eine Tabelle, einen Registersatz oder einen sonstigen Speicher aufweisen, um nachzuverfolgen, welche Berechnungseinheit bereits benutzt wird, sodass die Berechnung auf einer weiteren Rekursionsstufe von noch nicht benutzten Berechnungseinheiten durchgeführt werden kann. Durch die Rekursion und die hierbei entstehende Variantenvielfalt bei den zum Einsatz kommenden Berechnungsverfahren für die mathematische Operation sind Rückschlüsse auf die bei der Berechnung verwendeten Daten und Parameter nur unter einem derart hohen zeitlichen und technischen Aufwand möglich, dass es nicht mehr praktikabel ist.

Ausführungsformen der vorliegenden Erfindung definieren eine rekursive und randomisierte Berechnung der mathematischen Operation in Hardware, welche durch den rekursiven Verlauf der Berechnung wiederholt an Stellen kommt, an denen eine (randomisierte) Auswahl getroffen werden kann. Bereits bei der Berechnung eines einzelnen Gesamt- oder Teilergebnisses ist somit eine Vielzahl von möglichen Rechenwegen gegeben, die aufgrund der Variantenvielfalt nicht nachvollzogen werden kann.

Die vorliegende Erfindung ist nicht auf die Berechnung einer bestimmten mathematischen Operation beschränkt. Vielmehr kann die vorliegende Erfindung eine abgesicherte Berechnung oder eine Absicherung von Parametern bei der Berechnung jeder mathematischen Operation bereitstellen, welche durch eine Vielzahl von Berechnungsverfahren ermittelt werden kann. In einer bevorzugten Ausführungsform kann die mathematische Operation eine Multiplikation sein. In einer weiteren Ausführungsform kann die mathematische Operation eine Berechnung einer Potenz umfassen. Ferner kann ein elektronisches Modul zur Berechnung einer Addition vorgesehen sein. Der Satz von Parametern kann vorzugsweise zwei Parameter enthalten, welche mit der mathematischen Operation verknüpft werden. Beispielsweise kann ein Produkt von zwei Zahlen oder eine Potenz aus zwei Zahlen berechnet werden. Es sollte jedoch klar sein, dass die mathematische Operation ebenfalls nur auf einem und/oder auf mehr als zwei Parametern berechnet werden kann.

Bei der Berechnung einer Multiplikation sind in einer Ausführungsform die Berechnungsverfahren aus einem Karatsuba-Verfahren, einem Winograd-Verfahren, einem Montgomery-Verfahren oder einer klassischen teilproduktbasierten Multiplikation ausgewählt. Hierbei kann jede Berechnungseinheit aus der Vielzahl von Berechnungseinheiten ein anderes Berechnungsverfahren implementieren. Jedoch können auch mehrere Berechnungseinheiten aus der Vielzahl von Berechnungseinheiten dasselbe Rechnungsverfahren implementieren, sofern zumindest eine weitere Berechnungseinheit vorgesehen ist, welche ein anderes Berechnungsverfahren implementiert.

In einer weiteren Ausführungsform sind die Berechnungseinheiten Hardware-Einheiten, welche das jeweilige Berechnungsverfahren zumindest teilweise in Hardware implementieren. Die Berechnungseinheiten können separate und dedizierte Hardware-Einheiten sein, beispielsweise anwendungsspezifische integrierte Schaltungen (*application-specific integrated circuits,* ASICs), FPGAs (*field programmable gate arrays)* oder ein beliebiger anderer festverdrahteter Schaltkreis, der das Berechnungsverfahren in Hardware implementiert. Ferner können die Berechnungseinheiten durch eine Vielzahl von Prozessoren oder Mikroprozessoren oder der jeweiligen Prozessorkerne realisiert sein, welche zur Berechnung des jeweiligen Berechnungsverfahrens zumindest teilweise in Software und/oder zumindest teilweise in Hardware in beliebiger Kombination eingerichtet sind.

In einer weiteren Ausführungsform ist das elektronische Modul als ein einzelner Chip ausgeführt. Hierdurch wird eine effiziente Herstellung des elektronischen Moduls und eine entsprechend einfache Verbreitung, beispielsweise auf Smartcards, elektronischen Dokumenten oder Zahlungsmitteln, möglich.

Gemäß einem weiteren Aspekt der vorliegenden Erfindung ist ein Chip oder ein Kryptografiechip angegeben, der mindestens ein Modul nach einer Ausführungsform der vorliegenden Erfindung umfasst. Dementsprechend kann der Chip oder Kryptografiechip ein elektronisches Modul mit einer Vielzahl von Berechnungseinheiten zur Berechnung einer mathematischen Operation für einen Satz von Parametern umfassen, wobei jede Berechnungseinheit eingerichtet ist, die mathematische Operation mit dem Satz von Parametern nach einem Berechnungsverfahren zu berechnen, und wobei sich das Berechnungsverfahren bei mindestens zwei Berechnungseinheiten aus der Vielzahl von Berechnungseinheiten unterscheidet.

In einer Ausführungsform ist der Chip oder Kryptografiechip ein Chip für Elliptische-Kurven-Kryptografie (*elliptic curve cryptography,* ECC). Auf elliptischen Kurven beruhende Kryptografie ist ein weitverbreiteter Ansatz bei sicherheitskritischen Anwendungen, welcher eine wiederholte und effiziente Berechnung von insbesondere Multiplikationen und Potenzen erfordert. Durch die nichtdeterministische Variantenvielfalt der Berechnungsverfahren, die in dem elektronischen Modul des Kryptografiechips vorgesehen sind, können gängige Operationen der Elliptische-Kurven-Kryptografie besonders sicher ausgeführt werden, wobei Gefahren durch gängige Angriffsmethoden, beispielsweise durch die differentielle Verbrauchsanalyse oder Template-Angriffe, verhindert oder zumindest deutlich erschwert werden.

Gemäß einem weiteren Aspekt der vorliegenden Erfindung ist ein Verfahren zur Berechnung einer mathematischen Operation angegeben, das ein Berechnen einer mathematischen Operation für einen Satz von Parametern mit einer Vielzahl von Berechnungseinheiten umfasst, wobei jede Berechnungseinheit eingerichtet ist, die mathematische Operation auf dem Satz von Parametern nach einem Berechnungsverfahren zu berechnen, und wobei sich das Berechnungsverfahren bei mindestens zwei Berechnungseinheiten aus der Vielzahl von Berechnungseinheiten unterscheidet.

In einer bevorzugten Ausführungsform umfasst das Verfahren ferner ein randomisiertes Auswählen von einer aus der Vielzahl von Berechnungseinheiten zur Berechnung der mathematischen Operation, ein Übergeben des Satzes von Parametern an die ausgewählte Berechnungseinheit und ein Bereitstellen eines von der ausgewählten Berechnungseinheit berechneten Ergebnisses der mathematischen Operation.

Gemäß einem weiteren Aspekt ist ein Datenträger oder ein computerlesbares Medium angegeben, welches Befehle speichert, die, wenn sie von einer elektronischen Vorrichtung ausgeführt werden, die elektronische Vorrichtung dazu veranlassen, ein Verfahren nach einer Ausführungsform der vorliegenden Erfindung durchzuführen. Beispielsweise kann der Datenträger zur Konfiguration oder Einrichtung eines elektronischen Moduls gemäß einer Ausführungsform der vorliegenden Erfindung vorgesehen sein.

Erfindungsgemäß ist vorgesehen, dass strukturelle Merkmale oder die funktionale Konfiguration eines elektronischen Moduls gemäß einer oder mehreren Ausführungsformen der vorliegenden Erfindung als strukturelle Merkmale oder funktionale Konfiguration des Chips oder Kryptografiechips gemäß einer oder mehreren Ausführungsformen der vorliegenden Erfindung in beliebiger Kombination vorgesehen sein können. Umgekehrt können strukturelle Merkmale oder die funktionale Konfiguration eines Chips oder Kryptografiechips gemäß einer oder mehreren Ausführungsformen der vorliegenden Erfindung als strukturelle Merkmale oder funktionale Konfiguration des elektronischen Moduls gemäß einer oder mehreren Ausführungsformen der vorliegenden Erfindung in beliebiger Kombination vorgesehen sein. Darüber hinaus können einzelne Verfahrensschritte gemäß einer oder mehreren Ausführungsformen der vorliegenden Erfindung als funktionale Konfiguration des elektronischen Moduls, des Chips oder des Kryptografiechips in einer beliebigen Kombination vorgesehen sein, und die strukturellen Merkmale oder die funktionale Konfiguration des elektronischen Moduls, des Chips oder des Kryptografiechips gemäß einer oder mehreren Ausführungsformen der vorliegenden Erfindung können in Verfahrensschritten des Verfahrens gemäß einer oder mehreren Ausführungsformen der vorliegenden Erfindung in beliebiger Kombination vorgesehen sein.

## KURZE BESCHREIBUNG DER ZEICHNUNGEN

Weitere Vorteile der erfindungsgemäßen Speichervorrichtung und des Verfahrens ergeben sich aus der folgenden Beschreibung, in der die Erfindung anhand von Ausführungsbeispielen unter Bezugnahme auf die beigefügten Zeichnungen näher erläutert wird. Darin zeigen:

| | |
|---|---|
| Figur 1 | eine schematische Darstellung eines elektronischen Moduls gemäß einer Ausführungsform der vorliegenden Erfindung, |
| Figur 2 | eine Smartcard, welche gemäß einer Ausführungsform der vorliegenden Erfindung eingerichtet ist, |
| Figuren 3A bis 3C | Darstellungen von Verfahren zur Berechnung einer Multiplikation, welche in Ausführungsformen der vorliegenden Erfindung einsetzbar sind, |
| Figuren 4A und 4B | ein Schema einer rekursiven Berechnung einer Multiplikation, welche in Ausführungsformen der vorliegenden Erfindung einsetzbar ist, und |
| Figur 5 | ein Flussdiagramm eines Verfahrens zur Berechnung einer mathematischen Operation gemäß einer Ausführungsform der vorliegenden Erfindung. |

## DETAILLIERTE BESCHREIBUNG

In dieser Beschreibung wird die Konjunktion "oder" als eine nicht ausschließende Disjunktion verstanden, sodass der Ausdruck "A oder B" entweder "A" oder "B" oder "A und B" bedeuten kann. Ferner definieren die Begriffe "mathematische Operation" und "Berechnungsverfahren" eine konkrete Implementierung der mathematischen Operation bzw. des Berechnungsverfahrens als Software oder Hardware in beliebiger Kombination, sodass ein entsprechend eingerichtetes elektronisches Modul, wie beispielsweise mindestens eine integrierte Schaltung, mindestens ein Mikroprozessor oder mindestens ein Prozessor mit einem oder mehreren Kernen, die mathematische Operation oder das Berechnungsverfahren entweder direkt durch die zugrunde liegende Hardware bereitstellt oder die zugrunde liegende Hardware zumindest teilweise mit Software konfiguriert, um die mathematische Operation oder das Berechnungsverfahren zu implementieren.

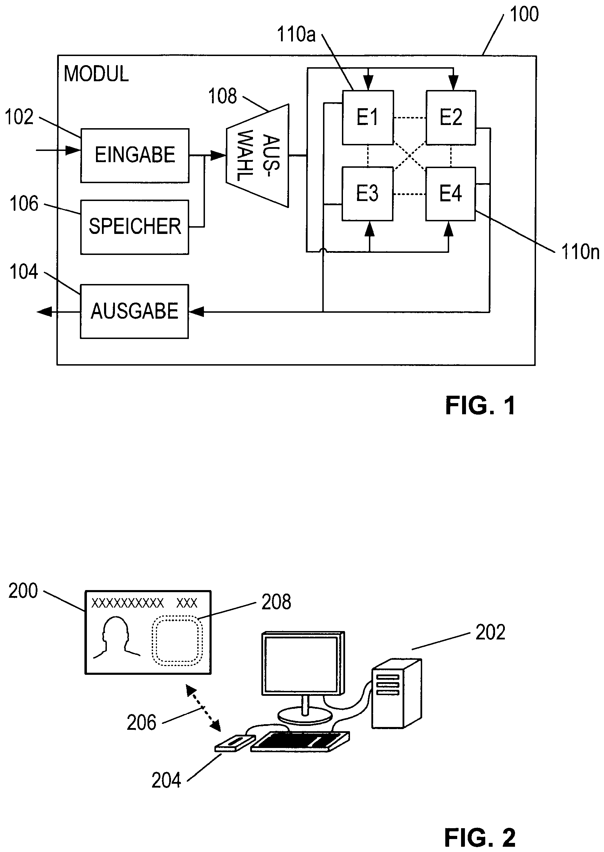

Figur 1 zeigt eine schematische Darstellung eines elektronischen Moduls gemäß einer Ausführungsform der vorliegenden Erfindung.

Das elektronische Modul 100 kann eine integrierte Schaltung oder eine andere hardwarebasierte Komponente sein. Das Modul 100 weist eine Eingabeschnittstelle 102 und eine Ausgabeschnittstelle 104 auf, welche beispielsweise leitungsgebunden oder drahtlos mit weiteren elektronischen Komponenten oder Vorrichtungen, beispielsweise einem Mikroprozessor einer Smartcard, einer Bus-Schnittstelle einer Rechenvorrichtung oder einem Kartenleser, kommunizieren können.

Das Modul 100 kann dazu eingerichtet sein, eine mathematische Operation zu berechnen, wobei die mathematische Operation auf einem oder mehreren Parametern oder entsprechenden Werten durchgeführt wird. Zumindest einige dieser Parameter können über die Eingabeschnittstelle 102 eingegeben werden. Weitere Parameter können aus einem Speicher 106 des Moduls 100 ausgelesen werden. Im Speicher 106 können vertrauliche oder sicherheitskritische Daten abgelegt sein, beispielsweise Schlüssel, welche als Parameter bei der Berechnung der mathematischen Operation herangezogen werden. Falls das Modul 100 in einer elektronischen Vorrichtung angeordnet ist, beispielsweise in einem Kryptografiechip oder als Bestandteil einer elektronischen Vorrichtung zum Einsatz in sicherheitskritischen Bereichen, kann der Speicher 106 ein abgesicherter Speicher sein. Ferner können die vertraulichen oder sicherheitskritischen Daten in einem externen Speicher der Vorrichtung hinterlegt sein, sodass diese über die Eingabeschnittstelle 102 in das Modul 100 eingegeben werden können.

Das Modul 100 weist ferner eine Auswahleinheit 108 und eine Vielzahl von Berechnungseinheiten 110a, ..., 110n auf, von denen lediglich vier Einheiten E1, E2, E3 und E4 dargestellt sind. Es sollte jedoch verständlich sein, dass die vorliegende Erfindung nicht auf eine bestimmte Anzahl von Berechnungseinheiten beschränkt ist und dass weniger als vier und mehr als vier Berechnungseinheiten im Modul 100 angeordnet sein können. Jede der Berechnungseinheiten 110a, ..., 110n ist eingerichtet, die mathematische Operation des Moduls 100 auf oder mit den Parametern zu berechnen, wobei jede Berechnungseinheit 110a, ..., 110n die mathematische Operation nach einem Berechnungsverfahren berechnet, das sich in mindestens zwei Berechnungseinheiten 110a, ..., 110n unterscheidet. Somit umfasst das Modul 100 mehrere unterschiedliche Berechnungseinheiten 110a, ..., 110n.

Die Auswahleinheit 108 ist eingerichtet, zur Laufzeit randomisiert eine der Berechnungseinheiten 110a, ..., 110n auszuwählen und die jeweiligen Parameter an die ausgewählte Berechnungseinheit 110i zu übergeben. Hierzu kann die Auswahleinheit 108 die über die Eingabeschnittstelle 102 eingegebenen Parameter und/oder die im Speicher 106 abgelegten Parameter an die ausgewählte Berechnungseinheit 110i weiterleiten. Die Auswahleinheit 108 kann direkt die entsprechenden Werte der Parameter ermitteln und an die ausgewählte Berechnungseinheit 110i weiterleiten. Alternativ oder zusätzlich kann die Auswahleinheit 108 oder das Modul 100 zumindest für einen Teil der Parameter Referenzen an die ausgewählte Berechnungseinheit 110i weiterleiten, sodass die ausgewählte Berechnungseinheit 110i die jeweils referenzierten Parameter über die Eingabeschnittstelle 102 oder den Speicher 106 abrufen kann.

Die Berechnungseinheiten 110a, ..., 110n sind vorzugsweise miteinander verkoppelt, wie es durch die gestrichelten Linien in Figur 1 angedeutet ist. Ferner können die Berechnungseinheiten 110a, ..., 110n an die Auswahleinheit 108 gekoppelt sein. Beispielsweise kann in mindestens einem Berechnungsverfahren in einer der Berechnungseinheiten 110a, ..., 110n eine rekursive Berechnung der mathematischen Operation vorgesehen sein, welche eine Zerlegung mindestens eines Parameters in eine Vielzahl von Teilstücken definiert, auf denen dann die mathematische Operation rekursiv durchgeführt wird. Die ausgewählte Berechnungseinheit 110i kann in einer nächsten Rekursionsstufe die mathematische Operation entweder wieder selbst durchführen, selbst eine andere Berechnungseinheit 110j auswählen und dieser mindestens eines der Teilstücke zur Berechnung der mathematischen Operation übergeben oder über die Auswahleinheit 108 randomisiert eine andere Berechnungseinheit 110j auswählen und dieser zumindest eines der Teilstücke zur Weiterberechnung der mathematischen Operation auf der nächsten Rekursionsstufe übergeben. Nach Abschluss der nächsten Rekursionsstufe kann die ausgewählte Berechnungseinheit 110i die Teilergebnisse wieder erhalten und zu einem Gesamtergebnis zusammensetzen.

Es wird davon ausgegangen, dass die Prinzipien der Rekursion dem Fachmann hinlänglich bekannt sind. Insbesondere sollte verständlich sein, dass die Rekursion bei einer Granularität der Parameter beendet wird, bei der diese nicht mehr in eine Vielzahl von Teilstücken zerlegt werden, sodass die mathematische Operation direkt auf den Parametern ausgeführt wird.

Ferner kann ein bestimmtes Berechnungsverfahren einer Berechnungseinheit 110a, ..., 110n definieren, dass auf einer nächsten Rekursionsstufe ein bestimmtes Berechnungsverfahren zum Einsatz kommt, welches durch eine andere Berechnungseinheit 110j implementiert sein kann. Dementsprechend kann jede Berechnungseinheit 110a, ..., 110n entweder direkt oder über die Auswahleinheit 108 Informationen darüber abrufen, welche Berechnungsverfahren durch die Berechnungseinheiten 110a, ..., 110n auf dem Modul 100 implementiert sind, um die nächste Rekursionsstufe anzusteuern.

Die ausgewählte Berechnungseinheit 110i kann ferner mit der Ausgabeschnittstelle 104 verbunden sein, um das Ergebnis der mathematischen Operation bereitzustellen.

Durch die Auswahl der Berechnungseinheit 110i und die hiermit erreichte Variantenvielfalt bei der Berechnung der mathematischen Operation wird eine Nachverfolgbarkeit der Berechnung unmöglich gemacht oder zumindest deutlich erschwert, wodurch Rückschlüsse auf die jeweils verwendeten Parameter für zahlreiche Angriffsmethoden, welche beispielsweise auf der Hardware-Kryptoanalyse beruhen, effektiv verhindert werden. Solche Angriffsmethoden werden insbesondere im sicherheitskritischen Umfeld eingesetzt, um aus einem Zustand oder Verhalten eines Sicherheitsmoduls Rückschlüsse auf die in dem Sicherheitsmodul gespeicherten oder verwendeten vertraulichen Daten ableiten zu können.

Wie es in Figur 2 gezeigt ist, kann eine Smartcard 200 oder eine beliebige andere elektronische Vorrichtung, beispielsweise ein elektronisches Dokument oder ein Zahlungsmittel, verwendet werden, um die Identität oder Authentizität eines Benutzers zu bestätigen oder Vorgänge zu validieren, die durch eine Rechenvorrichtung 202 ausgeführt werden. Die Rechenvorrichtung 202 kann über ein Kommunikationsmedium oder eine Kommunikationsschnittstelle, beispielsweise ein Lesegerät 204 verfügen, welches drahtlos oder leitungsgebunden mit der Smartcard 200 kommunizieren kann, wie es durch die Verbindungslinie 206 angedeutet ist. Die Rechenvorrichtung 202 kann von der Smartcard 200 beispielsweise eine Bestätigung, Authentifizierung oder Validierung anfordern, indem sie mindestens einen Wert an die Smartcard 200 übermittelt, wobei die Smartcard 200 auf der Grundlage des mindestens einen Werts und eines oder mehrerer weiterer Werte, beispielsweise eines geheimen Datenmaterials, eines geheimen Schlüssels oder ähnlicher Daten, die auf der Smartcard 200 hinterlegt oder von dieser abrufbar sein können, ein Ergebnis berechnet, das zur angeforderten Bestätigung, Authentifizierung oder Validierung verwendet werden kann. Typischerweise ist die Smartcard 200 derart abgesichert, dass die vertraulichen Daten nicht oder nur unter einem erheblichen Aufwand aus der Smartcard 200 ermittelbar sind, beispielsweise indem die Smartcard 200 über Hardware- und Software-Mechanismen verfügt, welche ein direktes Auslesen der vertraulichen Daten verhindern.

Ferner kann die Smartcard 200 gegen Angriffe der Hardware-Kryptoanalyse gemäß Ausführungsformen der vorliegenden Erfindung abgesichert sein, wie zum Beispiel die differentielle Verbrauchsanalyse (DPA) oder Template-Angriffe.

Bei der differentiellen Verbrauchsanalyse wird zunächst für eine größere Anzahl von Eingabedaten (bei Blockchiffren etwa Klartexte) und Schlüssel (oder Teilschlüssel) ein geeigneter Zwischenwert berechnet, der bei der Ausführung eines in der Smartcard 200 ausgeführten kryptografischen Algorithmus vorkommt. Aus diesen Zwischenwerten wiederum werden auf der Grundlage eines Verbrauchmodells für die Hardware hypothetische Energieverbräuche berechnet. Man erhält so eine Matrix $V = (v_{i,j})$, in der jeder Eintrag den besagten Verbrauch für ein bestimmtes Eingabedatum, indiziert mit $i$, und einen (Teil-)Schlüssel, indiziert mit $j$, angibt.

Im nächsten Schritt der DPA wird für jedes verwendete Eingabedatum eine Verbrauchskurve (engl. *power trace*) am Kryptogerät gemessen. Die Messwerte werden in einer Matrix $T = (t_{i,l})$ abgelegt. Mit $i$ werden hier wieder die Eingabedaten indiziert, mit $l$ die Messzeitpunkte, d. h., eine Zeile der Matrix repräsentiert eine Verbrauchskurve für ein bestimmtes Eingabedatum. Falls nun das gewählte Energieverbrauchsmodell den tatsächlichen Energieverbrauch einigermaßen korrekt vorhersagt, sollte es eine Spalte in der Matrix $T$ geben, deren Einträge stark mit den Einträgen einer Spalte aus $V$ korrelieren, nämlich der Spalte, die dem tatsächlich verwendeten Schlüssel des Gerätes entspricht. Man berechnet daher für alle Paare von Spalten aus $V$ und $T$ den Korrelationskoeffizienten. Erhält man einen (betragsmäßig) großen Koeffizienten für ein bestimmtes Paar, liefert dies mit gewisser Wahrscheinlichkeit den korrekten Schlüssel. Hierbei kann die genaue Ausrichtung (engl. *alignment*) der Power Traces zueinander wesentlich sein. Dies bedeutet, dass eine gegebene Operation in der Berechnung bei den verschiedenen Messungen stets an derselben Stelle der Power Trace auftreten muss, damit mittels der DPA Rückschlüsse auf die verwendeten vertraulichen Daten gezogen werden können.

Bei den Template-Angriffen wird angenommen, dass dem Angreifer ein baugleiches Kryptogerät zur Verfügung steht, das den kryptografischen Algorithmus für beliebige Eingabedaten ausführen kann. Durch wiederholte Berechnung kann der Energieverbrauch des Kryptogerätes relativ genau charakterisiert werden.

Bei einem Template-Angriff wird für jeden möglichen (Teil-)Schlüssel eine Reihe von Power Traces gemessen. Aus den Power Traces werden interessante (Zeit-)Punkte extrahiert, bei denen der Energieverbrauch mutmaßlich besonders stark vom Schlüssel abhängt. Für jeden Schlüssel werden die Mittelwerte des Energieverbrauchs an den interessanten Punkten berechnet. Das Ergebnis ist ein vom jeweiligen Schlüssel abhängender Mittelwertvektor $M = (m_1, ..., m_n)$. Der Wert $n$ gibt die Anzahl der interessanten Punkte an. Des Weiteren werden die Vektoren $N_i = ((t_r) - m_i)_r$ berechnet, wobei $r$ Index über die Power Traces und $i$ Index des interessanten Punktes ist. Die $N_i$ geben das Rauschen wieder, das die verschiedenen Messungen beeinflusst. Für jedes Paar von interessanten Punkten wird die Kovarianz $Cov(N_i,N_j)$ dieser Vektoren berechnet. Die Ergebnisse werden in einer Kovarianzmatrix $C$ abgelegt. Das Paar $(M,C)$ bezeichnet man als Template für einen Schlüssel.

Es wird nun eine Power Trace vom Zielgerät gemessen und an den interessanten Punkten betrachtet. Mithilfe von $(M, C)$ können die bedingten Wahrscheinlichkeiten für diese Power Trace unter den verschiedenen möglichen Schlüsseln berechnet werden, wobei die Berechnung unter der Annahme geschieht, dass der Energieverbrauch an den interessanten Punkten einer multivariaten Normalverteilung folgt. Die Anwendung der Maximum-Likelihood-Methode liefert dann den wahrscheinlichsten Schlüssel.

Ferner werden auch Template-Angriffe für asymmetrische Verfahren wie ECDSA diskutiert. Unter geeigneten Voraussetzungen lässt sich ein geheimer Signaturschlüssel rekonstruieren. Hierzu werden zunächst einige wenige Bits des verwendeten flüchtigen Schlüssels in mehreren Signaturen per Template-Angriff bestimmt. Hierfür werden etwa für die niedrigstwertigen Bits des flüchtigen Schlüssels geeignete Zwischenwerte bei der Punktmultiplikation betrachtet und entsprechende Templates erstellt. Da der Basispunkt fest ist, muss nur eine beschränkte Anzahl an Zwischenwerten betrachtet werden. Werden nun genügend Bits für verschiedene Signaturen bestimmt, lässt sich mithilfe sogenannter Gittermethoden der geheime Schlüssel gewinnen. Auch für Template-Angriffe ist ein korrektes Alignment wichtig, um beispielsweise die interessanten Punkte zu ermitteln. Ferner müssen die Power Traces des Zielgerätes aus der zweiten Phase des Angriffs richtig zu den Power Traces aus der ersten Phase ausgerichtet sein.

Zur Abwehr solcher und ähnlicher Angriffe kann in der Smartcard 200 ein abgesichertes Berechnungsmodul 208 vorgesehen sein, welches ein elektronisches Modul nach einer Ausführungsform der vorliegenden Erfindung sein kann, beispielsweise das Modul 100 aus Figur 1, welches durch die Variantenvielfalt der Berechnung einzelner mathematischer Operationen keine Rückschlüsse auf die jeweils verwendeten Daten zulässt oder diese zumindest deutlich erschwert.

Beispielsweise kann die Smartcard 200 Verfahren für die Elliptische-Kurven-Kryptografie (ECC) bereitstellen. Die vorliegende Erfindung ist jedoch nicht auf einen bestimmten Anwendungsbereich der Kryptografie beschränkt und kann auch mit anderen Kryptografieverfahren und in anderen sicherheitskritischen Bereichen verwendet werden. Die ECC ist lediglich beispielhaft als eine vorteilhafte Ausführungsform beschrieben.

Grundlage in der ECC sind Operationen auf Punkten einer elliptischen Kurve. Diese Punkte haben Koordinaten in einem endlichen Körper. Die durchzuführenden Operationen auf den Punkten übersetzen sich direkt in Operationen auf den Koordinaten, d. h. in Additionen und Multiplikationen von Elementen eines endlichen Körpers. Da die Multiplikationen einen gewissen rechnerischen Aufwand verursachen, tragen sie deutlich zum Stromprofil bei und können somit lohnende Ziele für Angriffsmethoden der Hardware-Kryptoanalyse sein.

Indem das Sicherheitsmodul 208 einzelne mathematische Operationen, beispielsweise die Multiplikationen oder die Potenzierung, bei jedem Aufruf auf eine andere Weise berechnet, unterscheiden sich die entsprechenden Power Traces derart stark voneinander, dass ein Alignment entweder gar nicht oder nur deutlich erschwert erreicht werden kann. Somit kann aus Power Traces der Smartcard 200 nicht unmittelbar auf die bei der Berechnung verwendeten vertraulichen Daten rückgeschlossen werden.

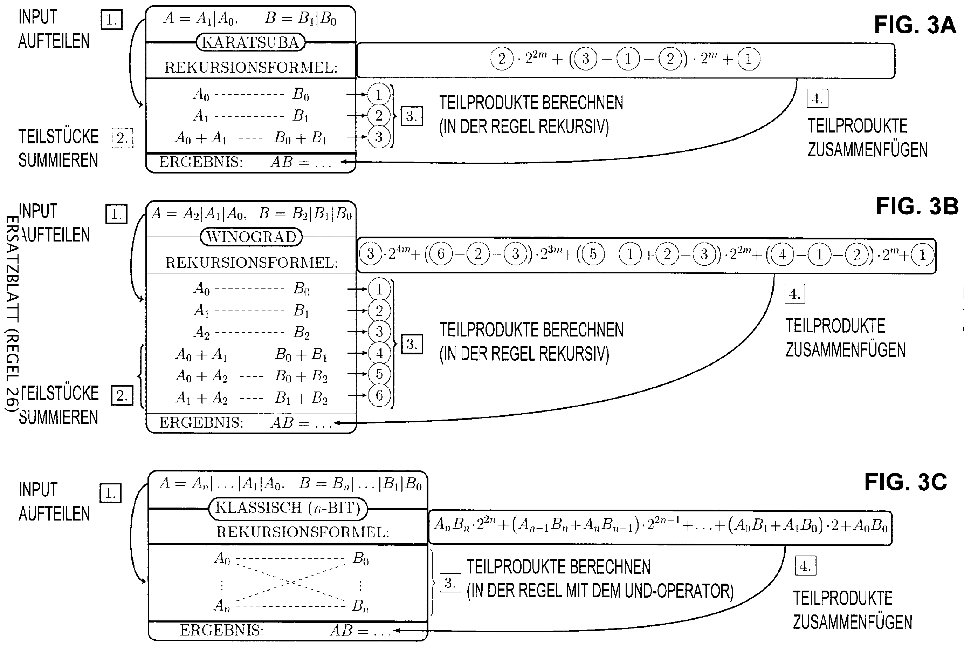

Die Figuren 3A bis 3C bilden jeweils ein Schema von unterschiedlichen Berechnungsverfahren zur Berechnung einer Multiplikation ab, welche in Ausführungsformen der vorliegenden Erfindung einsetzbar sind. Beispielsweise kann das Modul 100 aus Figur 1 oder die Sicherheitskomponente 208 aus Figur 2 über eine Vielzahl von Berechnungseinheiten verfügen, welche jeweils ein Berechnungsverfahren gemäß den Figuren 3A bis 3C zur Durchführung der Multiplikation aufweisen.

Die Multiplikation von $n$-Bit-Zahlen ist eine der grundlegenden Operationen und sie ist mit $O(n^2)$ vergleichsweise teuer. Es wird davon ausgegangen, dass dem Fachmann die $O$-Notation oder Landau-Symbole bekannt sind, um die Komplexität von Berechnungsaufgaben zu charakterisieren. Aufgrund der $O(n^2)$-Komplexität der Multiplikation findet man in der Literatur diverse Vorschläge für Multiplikationsalgorithmen, die eingesetzt werden, um den rechnerischen Aufwand der Multiplikation zu verkürzen, z. B. auf $O(n^{\log_2 3}) \approx O(n^{1,585})$ mit dem rekursiv angewendeten Karatsuba-Verfahren.

In traditionellen Rechensystemen übernimmt die Durchführung der Multiplikation eine spezielle Recheneinheit, beispielsweise die *arithmetic logic unit* (ALU). Diese Recheneinheit kann in unterschiedlichen Chipdesigns auf unterschiedliche Weise umgesetzt sein, nach den jeweiligen konkreten Platz- oder Laufzeitanforderungen. Ist das Design jedoch einmal festgelegt, so sind alle Chips, die hiernach gefertigt werden, exakt gleich aufgebaut und verwenden bei jeder Berechnung stets denselben Multiplikationsalgorithmus. Dementsprechend weisen wiederholte Messungen derselben Berechnung an einem Chip, aber auch an verschiedenen Chips derselben Baureihe, große Ähnlichkeit auf, wodurch die bereits beschriebenen DPA und Template-Angriffe praktikabel werden, bei denen viele Power Traces aufgenommen, verglichen und korrekt zueinander ausgerichtet werden müssen.

Zwar könnte jeder Chip bei seiner Herstellung mit einer zufällig ausgewählten Multipliziervariante versehen werden, sodass alle Chips nach außen hin dasselbe Verhalten zeigen, intern aber unterschiedliche Algorithmen verwenden und somit auch unterschiedlich verdrahtet sind. Dieser Schutz versagt jedoch gegen solche Angriffe, bei denen dem Angreifer kein weiteres, mit dem Angriffsziel übereinstimmendes Chip-Exemplar vorliegen muss. Bei der DPA werden beispielsweise die Power Traces von genau dem Chip aufgenommen, der auch angegriffen werden soll. Lediglich die Template-Angriffe werden erschwert, da diese voraussetzen, dass der Angreifer neben dem Zielobjekt auch einen zweiten Chip für die Template-Herstellung zur Verfügung hat. Sind die beiden Chips nicht baugleich, so ist es unwahrscheinlich, dass sich das Template anschließend auf das Zielobjekt anwenden lässt. Verfügt der Angreifer aber über einen Satz von Chips, die den einzelnen Varianten des Multiplizierers entsprechen, so können mit einem nur unerheblichen zusätzlichen Aufwand Rückschlüsse auf das verwendete Geheimmaterial gezogen werden.

Ferner lässt sich die Herstellung von unterschiedlichen Chips mit unterschiedlichen Multipliziervarianten nicht praktikabel auf eine Massenproduktion von beispielsweise ASICs übertragen, da jede dieser individuellen Verdrahtungen im Produktionsprozess einen eigenen Maskensatz erfordert, was bei einer hohen Variantenzahl unweigerlich zu Unkosten führt.

Gängige Multiplikationsverfahren führen die Berechnung eines Produkts $A \cdot B$ zweier großer Zahlen $A$ und $B$ auf die Berechnung von mehreren Produkten kleinerer Zahlen zurück. Ein Algorithmus einer Multiplikation ist in Tabelle 1 dargestellt.

Tabelle 1: Multiplikationsverfahren

**Input:** Zwei Zahlen $A$ und $B$
**Output:** $A \cdot B$.

1. Die Ausgangszahlen werden in Teilstücke kürzerer Länge zerlegt.
2. Aus den Teilstücken werden durch geeignetes Addieren, Subtrahieren und ggf. Shiften neue Terme gebildet.

(fortgesetzt)

3. Diese neuen Terme werden nun in geeigneter Weise miteinander multipliziert, um Teilprodukte zu erhalten.

4. Die Teilprodukte werden zum Gesamtergebnis zusammengefasst, wobei wieder nur Additionen, Subtraktionen und Shifts verwendet werden.

In Schritt 3 kann dabei eine Rekursion gestartet werden, d. h., dass zum Berechnen der Teilprodukte wieder eine Zerlegung der Faktoren in noch kleinere Teilstücke vorgenommen wird. Dementsprechend ist vorteilhafterweise in Ausführungsformen der vorliegenden Erfindung eine rekursive Berechnung vorgesehen, um eine größtmögliche Reduktion des Aufwands bei einer gleichzeitig hohen Variationsvielfalt zu erzielen.

In den in den Figuren 3A bis 3C gezeigten Beispielen wird ein Produkt zweier Zahlen $A$ und $B$ einer bestimmten Länge berechnet. Es sollte verständlich sein, dass die gezeigten Verfahren auf Zahlen jeder Größenordnung anwendbar sind, wobei vorzugsweise besonders große Zahlen betrachtet werden, z. B. mit einer Länge von 256 Bit oder mehr. Zu Darstellungszwecken wird davon ausgegangen, dass beide Zahlen in Binärdarstellung vorliegen. Ferner können beide Zahlen so mit führenden Nullen aufgefüllt werden, dass sie dieselbe Bitlänge $n$ haben, die den Teilbarkeitsanforderungen des jeweiligen Verfahrens entspricht.

Figur 3A zeigt eine schematische Darstellung des Karatsuba-Verfahrens, das beispielsweise in Anatoli Alexejewitsch Karatsuba, Yu Ofman: Multiplication of Many-Digital Numbers by Automatic Computers, Doklady Akad. Nauk SSSR, vol. 145 (1962), S. 293-294, beschrieben ist. Wie in Figur 3A dargestellt, kann das Verfahren als eine Abfolge von vier Schritten beschrieben sein:

1. Sei die Bitlänge $n$ gerade, also etwa $n = 2m$. Es bezeichne $A_1$ die Zahl, die aus den höherwertigen $m$ Bits von $A$ gebildet wird, und $A_0$ die Zahl, die aus den niederwertigen $m$ Bits von $A$ gebildet wird. Analog seien die Bezeichnungen für $B$. Es gilt also

$$A = A_1 \cdot 2^m + A_0 \text{ und } B = B_1 \cdot 2^m + B_0$$

mit $0 \le A_0, A_1, B_0, B_1 < 2^m$, im Folgenden durch die Konkatenationsschreibweise $A = A_1|A_0$ bzw. $B = B_1|B_0$ ausgedrückt.

2. Neben den so bestimmten Termen $A_0, A_1, B_0, B_1$ berechne man auch $A_0 + A_1$ und $B_0 + B_1$.

3. Man berechne die drei Produkte $A_0B_0, A_1B_1$ und $(A_0 + A_1)(B_0 + B_1)$.

4. Gemäß der Formel

$$A \cdot B = (A_1 \cdot 2^m + A_0)(B_1 \cdot 2^m + B_0)$$
$$= A_1B_1 \cdot 2^{2m} + \big((A_0 + A_1)(B_0 + B_1) - A_0B_0 - A_1B_1\big) \cdot 2^m + A_0B_0$$

setze man die Teilprodukte aus Schritt 3 zum Gesamtergebnis zusammen. Hierbei kann vorteilhafterweise die Multiplikation mit Zweierpotenzen in Hardware effizient als ein Links-Shift dargestellt werden.

Figur 3B stellt schematisch ein weiteres Multiplikationsverfahren dar, das unter dem Namen Winograd-Verfahren bekannt ist und beispielsweise in Shmuel Winograd: Arithmetic complexity of computations, SIAM (1980), und Daniel V. Bailey, Christof Paar: Efficient arithmetic in finite field extensions with application in finite field cryptography, Journal of Cryptology, vol. 14, no. 3 (2001), S. 153-176, beschrieben ist. Wie in Figur 3B gezeigt, kann das Winograd-Verfahren über vier Verfahrensschritte definiert sein:

1. Sei die Bitlänge $n$ durch 3 teilbar, $n = 3m$. Die Zahlen $A$ und $B$ werden jetzt in jeweils drei Teile der Länge $m$ zerlegt, also

$$A = A_2 \cdot 2^{2m} + A_1 \cdot 2^m + A_0 \quad \text{und} \quad B = B_2 \cdot 2^{2m} + B_1 \cdot 2^m + B_0$$

mit $0 \le A_0, A_1, A_2, B_0, B_1, B_2 < 2^m$ oder kurz: $A = A_2|A_1|A_0$ und $B = B_2|B_1|B_0$.

2. Man berechne zusätzlich $A_0 + A_1$, $A_0 + A_2$ und $A_1 + A_2$ sowie $B_0 + B_1$, $B_0 + B_2$ und $B_1 + B_2$.

3. Man berechne aus den nun bekannten Termen die Produkte $A_0B_0$, $A_1B_1$, $A_2B_2$, $(A_0 + A_1)(B_0 + B_1)$, $(A_0 + A_2)(B_0 + B_2)$ und $(A_1 + A_2)(B_1 + B_2)$.

4. Das Gesamtergebnis erhält man aus den in Schritt 3 berechneten Produkten gemäß der Formel:

$$
\begin{aligned}
A \cdot B &= (A_2 \cdot 2^{2m} + A_1 \cdot 2^m + A_0) \cdot (B_2 \cdot 2^{2m} + B_1 \cdot 2^m + B_0) \\
&= A_2B_2 \cdot 2^{4m} + ((A_1 + A_2)(B_1 + B_2) - A_1B_1 - A_2B_2) \cdot 2^{3m} \\
&\quad + ((A_0 + A_2)(B_0 + B_2) - A_0B_0 + A_1B_1 - A_2B_2) \cdot 2^{2m} \\
&\quad + ((A_0 + A_1)(B_0 + B_1) - A_0B_0 - A_1B_1) \cdot 2^m + A_0B_0
\end{aligned}
$$

Ein weiteres Multiplikationsverfahren, das auf dem Karatsuba-Verfahren basiert, ist unter dem Namen Montgomery-Verfahren bekannt und in Peter L. Montgomery: Five, Six, and Seven-Term Karatsuba-Like Formulae, IEEE Transactions on Computers, vol. 54, no. 3 (März 2005), beschrieben. Abweichend von den Verfahren nach Karatsuba und Winograd werden die Zahlen $A$ und $B$ in jeweils fünf Teile gleicher Länge zerlegt: $A = A_4|A_3|A_2|A_1|A_0$ und $B = B_4|B_3|B_2|B_1|B_0$. In einem Schritt 3 der Verfahren nach Karatsuba oder Winograd entsprechenden Schritt werden 13 Teilprodukte berechnet.

Figur 3C stellt ein weiteres Multiplikationsverfahren dar, welches unter dem Namen "klassische Multiplikation" bekannt ist und als ein teilproduktbasiertes Multiplikationsverfahren charakterisiert werden kann. Das klassische Multiplizieren wird über die folgenden, in Figur 3C illustrierten Verfahrensschritte definiert:

1. Die Zahlen $A$ und $B$ werden in Teilstücke der Länge $m = 1$ zerlegt, also

$$
A = \sum_{i=0}^{n-1} A_i 2^i \quad \text{und} \quad B = \sum_{j=0}^{n-1} B_j 2^j
$$

mit $A_i$, $B_j \in \{0; 1\}$.

2. Ein zu Schritt 2 der Verfahren aus Figuren 3A und 3B analoger Schritt entfällt.

3. Man berechne $A_iB_j$ für alle $0 \leq i;j < n$.

4. Für das Gesamtergebnis $A \cdot B = \sum_{i=0}^{n-1} \sum_{j=0}^{n-1} A_i B_j 2^{i+j}$ müssen die Teilprodukte aus Schritt 3 nur noch geshiftet und addiert werden.

Die vorgenannten, mit Bezug auf die Figuren 3A bis 3C beschriebenen Multiplikationsverfahren und weitere Verfahren können gemäß Ausführungsformen der vorliegenden Erfindung in einzelnen Berechnungseinheiten auf einem einzelnen Chip in Hardware implementiert sein, wobei das zu verwendende Multiplikationsverfahren erst zur Laufzeit bestimmt werden kann, beispielsweise durch eine randomisierte Auswahl der jeweiligen Berechnungseinheit. Hierzu kann auf einem Chip ein Mittel vorgesehen sein, welches wiederholt zufällig oder pseudozufällig eines der implementierten Multiplikationsverfahren auswählt, beispielsweise unter Verwendung eines Zufallszahlengenerators.

Soll nun das Produkt zweier Zahlen berechnet werden, so wird zunächst eine Berechnungseinheit ausgewählt und das darin implementierte Multiplikationsverfahren angewendet. Wie bei den vorstehend genannten, mit Bezug auf die Figuren 3A bis 3C beschriebenen Multiplikationsverfahren näher dargelegt, lässt sich die Berechnung einer Multiplikation von zwei großen Zahlen auf einzelne Teilprodukte zurückführen, beispielsweise die in dem jeweiligen Schritt 3 auftretenden Teilprodukte, welche erneut von neu auszuwählenden Berechnungseinheiten und den darin implementierten Multiplikationsverfahren berechnet werden können. Diese müssen nicht mit dem im ersten Schritt gewählten Multiplikationsverfahren übereinstimmen. Dementsprechend kann ein beliebiges Multiplikationsverfahren rekursiv fortgesetzt werden, wenn ein Teilprodukt zu berechnen ist, wodurch eine erneute Auswahl einer Berechnungseinheit und eines darin implementierten Berechnungsverfahrens angestoßen werden kann. Hierdurch kann die Variantenvielfalt bei der Berechnung der Multiplikation derart erhöht werden, dass die oben dargelegten Angriffe unmöglich gemacht oder derart erschwert werden, dass Rückschlüsse auf das verwendete vertrauliche Datenmaterial nicht mehr praktikabel gezogen werden können.

Ein möglicher Verfahrensablauf zur Berechnung einer Multiplikation gemäß einer Ausführungsform der vorliegenden Erfindung ist in Tabelle 2 dargestellt.

Tabelle 2: Randomisiertes rekursives Multiplikationsverfahren

**Input:** Zwei Zahlen $A$ und $B$

**Output:** $A \cdot B$.

0. Wähle ein Multiplikationsverfahren.

1. Zerlege die Zahlen A und B gemäß dem gewählten Verfahren in Teilstücke kürzerer Bitlänge.

2. Bilde aus den Teilstücken gemäß dem gewählten Verfahren durch Addition, Subtraktion und Shift neue Terme.

3. Für jedes Teilprodukt, das gemäß dem gewählten Verfahren aus diesen Termen berechnet werden soll,

• steige eine Rekursionsebene ab, d. h., gehe zu Schritt 0, wenn die Bitlänge der Terme größer 1 ist, ODER

• führe die Multiplikation direkt aus, wenn die Bitlänge der Terme 1 ist.

Sind alle Teilprodukte einer Rekursionsebene auf diese Weise verarbeitet, gehe zu Schritt 4. Vorteilhafterweise kann eine 1-Bit-Multiplikation in Ausführungsformen der vorliegenden Erfindung direkt in Hardware als ein logischer AND-Operator umgesetzt sein.

4. Setze alle Teilprodukte der aktuellen Rekursionsebene gemäß dem hierfür gewählten Multiplikationsverfahren zusammen. Ist die aktuelle Rekursionsebene die oberste, so gib das Ergebnis als Endergebnis der Berechnung aus. Andernfalls liefere das Ergebnis an die nächsthöhere Rekursionsebene zurück und fahre dort mit Schritt 3 fort.

In Schritt 0 wird die Wahl der Multiplikationsverfahren für die Berechnung der (Teil-)Produkte in der Regel zufällig erfolgen. Es ist aber auch denkbar, für einige oder alle (Teil-)Produkte ein bestimmtes Verfahren deterministisch vorzugeben. Zum Beispiel könnte für Terme mit einer Bitlänge oberhalb einer bestimmten Schranke (z. B. 8 Bit) das Multiplikationsverfahren immer zufällig ausgewählt werden, während alle kürzeren Terme stets mit einem vorgegebenen Verfahren, wie etwa der in Bezug auf Figur 3C beschriebenen klassischen Methode, berechnet werden.

Der in Tabelle 2 schematisch beschriebene Algorithmus kann in Ausführungsformen der vorliegenden Erfindung als Kombination einzelner Berechnungseinheiten auf einem Modul vorgesehen sein, sodass beispielsweise auf einem Chip nicht eines, sondern mehrere Multiplikationsverfahren in Hardware implementiert sind. Die implementierten Multiplikationsverfahren können z. B. die vier in Bezug auf die Figuren 3A bis 3C beschriebenen Verfahren sein. Es sollte jedoch verständlich sein, dass die vorliegende Erfindung weder auf eine bestimmte mathematische Operation noch bestimmte Verfahren noch auf eine Anzahl von Verfahren beschränkt ist. Vielmehr sind andere mathematische Operationen und andere Berechnungsverfahren in beliebiger Anzahl und Kombination denkbar und in Ausführungsformen der vorliegenden Erfindung vorgesehen.

Beispielsweise kann eine bevorzugte Ausführungsform auf eine abgesicherte Berechnung der Potenz gerichtet sein. Dem Fachmann ist bekannt, dass die Potenzierung rekursiv berechnet und auf Multiplikationen zurückgeführt werden kann. Dementsprechend kann die Berechnung der Potenz in einer Vielzahl unterschiedlicher Potenzierungseinheiten, welche einzelnen Berechnungseinheiten entsprechen können, auf einzelne Multiplikationen zurückgeführt werden, welche dann von einer Vielzahl unterschiedlicher Multiplikationseinheiten, welche ebenfalls einzelnen Berechnungseinheiten entsprechen könnten, (rekursiv) durchgeführt werden. Beispielhafte Berechnungsansätze zur Berechnung der Potenz, die in einem oder mehreren Berechnungsmodulen implementiert sein können, umfassen das Montgomery-ladder-Verfahren, das Left-To-Right- oder Right-To-Left-Square-and-multiply-Verfahren, das Multiply-always-oder Square-always-Verfahren und die Window-Verfahren, wie sie beispielsweise in Daniel M. Gordon: A survey of fast exponentiation methods, Journal of Algorithms, vol. 27 no. 1 (1997), S. 129-146; Marc Joye, Sung-Ming Yen: The Montgomery Powering Ladder, Lecture Notes in Computer Science, vol. 2523, Springer (2003), S. 291-302; und Jaecheol Ha et al.: Power Analysis Attacks on the Right-to-Left Square-Always Exponentiation Algorithm, Journal of Internet Services and Information Security, vol. 4, no. 4 (2014), S. 38-51, beschrieben sind. Es sollte jedoch verständlich sein, dass die vorliegende Erfindung nicht auf die vorgenannten Berechnungsverfahren beschränkt ist und stattdessen oder zusätzlich beliebige, vorzugsweise rekursive Verfahren zur Berechnung der Potenz vorgesehen sein können.

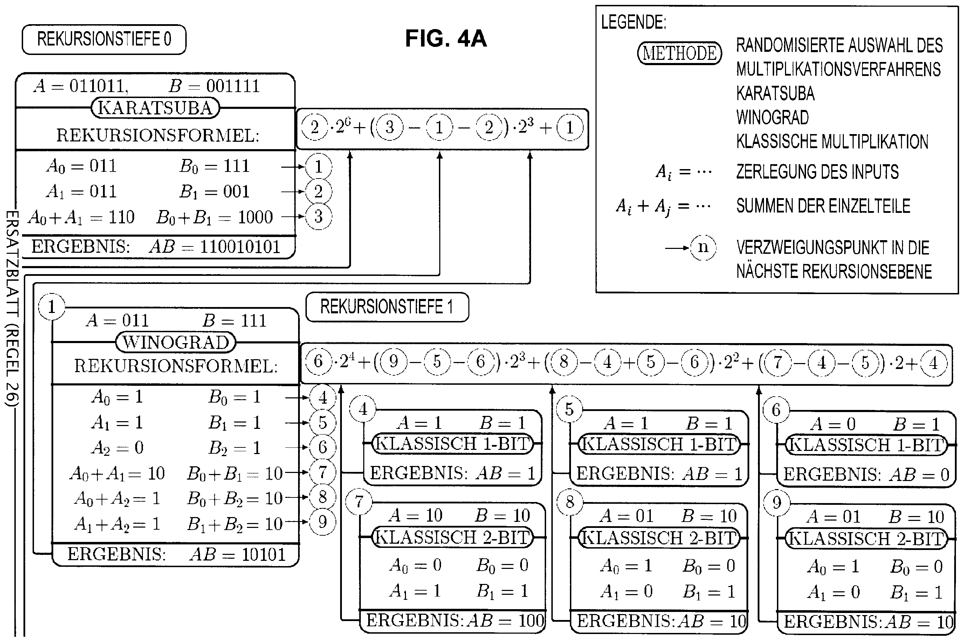

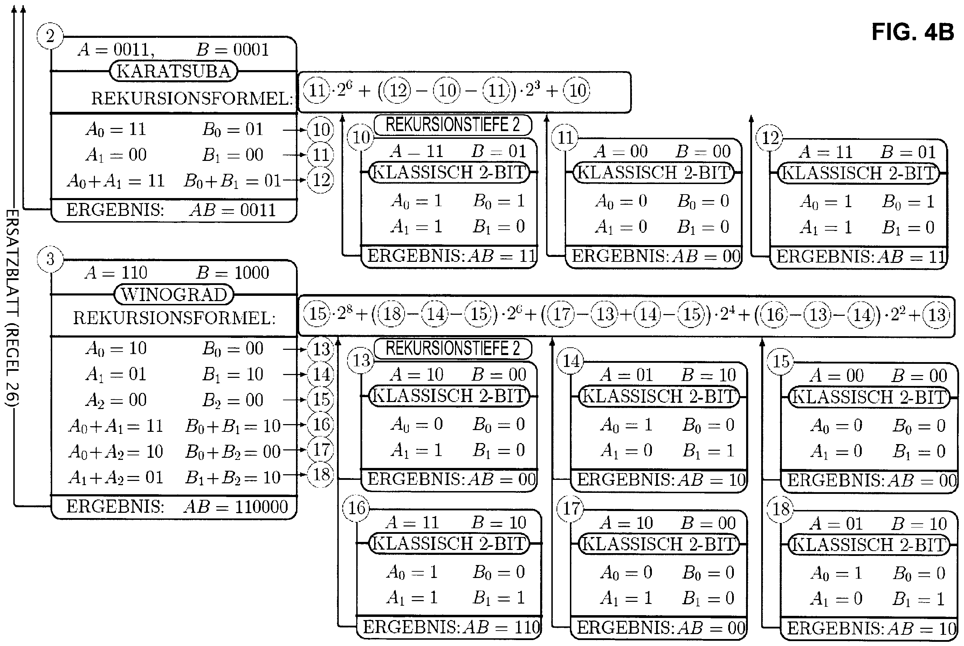

Ein Zahlenbeispiel einer Durchführung des in Tabelle 2 definierten randomisierten Multiplikationsverfahrens mit Rekursion ist in den Figuren 4A und 4B gegeben. Es sollte verständlich sein, dass die hier verwendeten Zahlen lediglich beispielhaft sind und keine Einschränkung des erfindungsgemäßen Ansatzes darstellen. Vielmehr sind Ausführungsformen der vorliegenden Erfindung auf beliebige mathematische Operationen, Berechnungsverfahren und Werte von Parametern anwendbar.

Wie in den Figuren 4A und 4B gezeigt, kann ein Produkt der Zahlen $A$ = 27 und $B$ = 15 (in Binärdarstellung: $A$ = 11011 und $B$ = 1111) berechnet werden. Die Größe der Zahlen $A$ und $B$ ist im gezeigten Beispiel der Übersichtlichkeit halber verhältnismäßig klein gehalten. Es sollte jedoch verständlich sein, dass die vorliegende Erfindung nicht auf eine Zahlengröße beschränkt ist. Vielmehr können die Parameter eine Größe von 256 Bit, 512 Bit, 1024 Bit, 2048 Bit oder mehr haben.

Die Berechnungseinheiten und entsprechende Multiplikationsverfahren können gemäß einer Regel ausgewählt werden, welche einen oder mehrere Gewichtungsfaktoren und/oder die Länge der Eingabedaten berücksichtigt. So kann bei einer Bitlänge der zu verarbeitenden Terme (Parameter) von größer als 2 zwischen dem Karatsuba- (vgl. Fig. 3A) und dem Winograd-Verfahren (vgl. Fig. 3B) (pseudo-)zufällig und mit gleicher Wahrscheinlichkeit gewählt werden. Ist die Bitlänge hingegen höchstens 2, so kann die klassische Methode ausgewählt werden (vgl. Fig. 3C).

In den Figuren 4A und 4B ist ein möglicher Verlauf der Multiplikation dargestellt. In der obersten Rekursionsebene 0 (vgl. Fig. 4A) wurde zufällig das Karatsuba-Verfahren gewählt, und zum Berechnen der Teilprodukte 1, 2 und 3 in Rekursionsebene 1 kamen - in dieser Reihenfolge - Winograd (Fig. 4A), Karatsuba (Fig. 4B) und noch einmal Winograd (Fig. 4B) zum Einsatz. In Rekursionsebene 2 hatten alle auftretenden Terme höchstens 2 Bit, sodass immer die klassische Multiplikation angewendet wurde, welche beispielsweise auf eine 1-Bit-Multiplikation zurückführbar ist, die mittels eines logischen AND-Operators unmittelbar in Hardware umgesetzt sein kann.

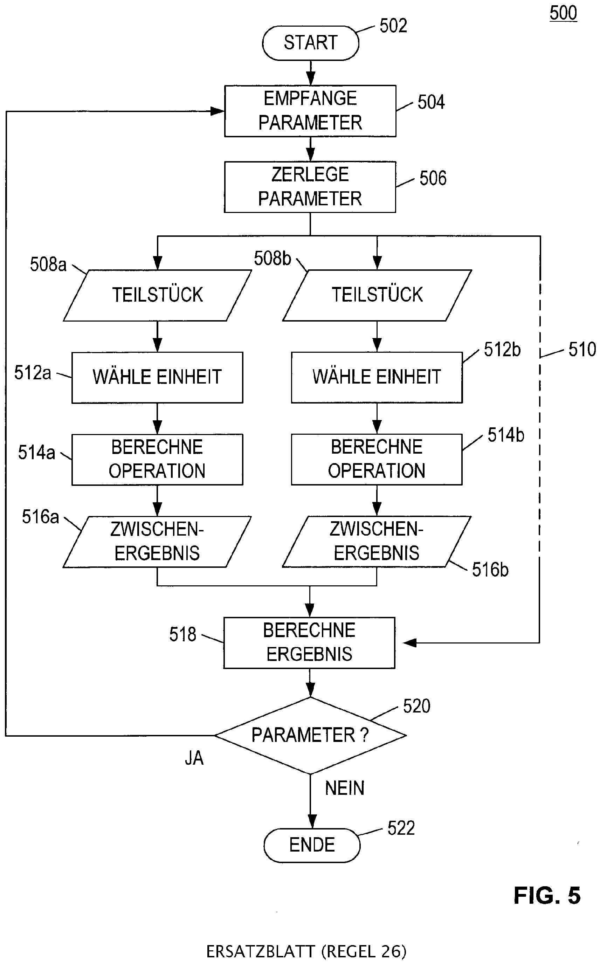

Figur 5 bildet ein schematisches Flussdiagramm eines Verfahrens zur Berechnung einer mathematischen Operation gemäß einer Ausführungsform der vorliegenden Erfindung ab.

Das Verfahren 500, wie es in Figur 5 dargestellt ist, kann in einem elektronischen Modul gemäß einer Ausführungsform der vorliegenden Erfindung implementiert sein, beispielsweise im Modul 100 aus Figur 1 oder im Berechnungsmodul 208 aus Figur 2, und eine rekursive Berechnung der mathematischen Operation definieren.

Das Verfahren 500 kann in Schritt 502 starten, beispielsweise indem das Modul 100 zur Berechnung der mathematischen Operation verwendet wird oder die Smartcard 200 mit dem Lesegerät 204 in Kommunikation tritt.

In Schritt 504 kann ein Satz von Parametern empfangen werden, auf dem die mathematische Operation berechnet werden soll. Die Berechnung der mathematischen Operation auf dem Satz von Parametern kann mit einer Vielzahl unterschiedlicher Berechnungseinheiten durchgeführt werden, wobei jede Berechnungseinheit eingerichtet ist, die mathematische Operation auf dem Satz von Parametern zu berechnen, jedoch nach einem dedizierten Berechnungsverfahren. Hierbei unterscheidet sich das Berechnungsverfahren bei mindestens zwei Berechnungseinheiten, sodass nicht vorab bestimmt werden kann, welches Berechnungsverfahren zur Berechnung der mathematischen Operation genutzt wird.

Nach der Auswahl einer Berechnungseinheit kann das entsprechende Berechnungsverfahren eine Zerlegung der Parameter in Schritt 506 durchführen, was zu einer Vielzahl von Teilstücken 508a, 508b führen kann, welche jeweils als eigenständige Teilprobleme betrachtet und beispielsweise auf einer nächsten Rekursionsstufe als Eingabeparameter verwendet werden können. Obwohl nur zwei Teilstücke 508a, 508b in Figur 5 gezeigt sind, wird dem Fachmann verständlich sein, dass die Zerlegung in Schritt 506 zu einer beliebigen Anzahl von Teilstücken und einer entsprechenden Berechnung führen kann, wie es durch die gestrichelte Linie 510 angedeutet ist.

Jedes Teilstück 508a, 508b kann in einer nächsten Rekursionsstufe zur Berechnung der mathematischen Operation herangezogen werden, wobei jeweils eine weitere Berechnungseinheit in den Schritten 512a, 512b ausgewählt werden kann, welche dann die Berechnung in den Schritten 514a, 514b durchführt. Die Berechnung auf der nächsten Rekursionsstufe kann letztendlich einer Wiederholung des Verfahrens 500 entsprechen, wobei dann im Schritt 504 jeweils die Teilstücke 508a, 508b des zerlegten Parameters als Berechnungsgrundlage genommen werden.

Die Berechnung in den Schritten 514a, 514b liefert die Zwischenergebnisse 516a, 516b, welche in Schritt 518 zu einem Gesamtergebnis zusammengesetzt werden können. Das Verfahren 500 kann das berechnete Gesamtergebnis zurückliefern.

In Schritt 520 kann bestimmt werden, ob das Verfahren 500 weiter betriebsbereit bleiben soll. Falls eine weitere Berechnung erfolgen soll, kann das Verfahren 500 zum Schritt 504 verzweigen. Anderenfalls kann das Verfahren in Schritt 522 enden.

Aufgrund der Variantenvielfalt der Berechnungsmöglichkeiten, welche durch die unterschiedlichen Berechnungseinheiten und die rekursive Zerlegung der Eingabeparameter entsteht, fallen die Stromprofile der Berechnung der jeweiligen das Verfahren 500 implementierenden Hardware unterschiedlich aus, sodass ein Entdecken von für einen Angriff relevanten Stellen und ein präzises Alignment verhindert werden können.

Zur Abschätzung der Variantenvielfalt für eine Multiplikation, beispielsweise unter Beachtung der Vorschriften, die für das mit Bezug auf die Figuren 4A und 4B beschriebene Beispiel gegeben sind, kann $A(n)$ die Anzahl der möglichen Verläufe für die Multiplikation zweier $n$-Bit-Zahlen bezeichnen. Es ist dann:

$$A(n) = 1, \qquad\qquad\qquad \text{falls } n \in \{1, 2\},$$

$$A(n) \geq \left( A\left( \left\lceil \tfrac{n}{2} \right\rceil \right) \right)^3 + \left( A\left( \left\lceil \tfrac{n}{3} \right\rceil \right) \right)^6, \qquad \text{falls } n \geq 3.$$

In der Formel für $A(n)$, $n \geq 3$ gilt im Allgemeinen keine Gleichheit, denn sie berücksichtigt nicht, dass die in Schritt 2 des oben beschriebenen Multiplikationsverfahrens gebildeten Summen durch Übertragsbildung länger werden können als die in Schritt 1 vorkommenden Teilstücke.

Eine untere Abschätzung für die Anzahl $A(n)$ der möglichen Verläufe der Multiplikation zweier $n$-Bit-Zahlen kann auf dem in den Figuren 4A und 4B gezeigten Beispiel wie folgt geschehen:

$A(1) = 1$
$A(2) = 1$
$A(3) \geq 2$
$A(4) \geq 2$
$A(5) \geq 9$
$A(3m) > (A(m))^6$ für alle $m \geq 1$
$A(256) > 10^{200}$

Somit wären bei der Berechnung des Produkts von $A = 27$ und $B = 15$ mindestens 9 verschiedene Verläufe möglich. Dieser Variantenreichtum steigt für größere Zahlen noch an. Für 256-Bit-Zahlen sind es bereits mehr als $10^{200}$ Möglichkeiten, wobei die Zahl von der Anzahl und der Art der jeweiligen zur Verfügung stehenden Multiplikationsverfahren abhängt. Es stellt sich jedoch bereits bei einer geringen Anzahl von Verfahren eine große Variantenvielfalt ein.

Durch die randomisierte Algorithmenwahl entsteht bei jeder Multiplikation - auch mit gleichen Eingangswerten - ein individuelles, nicht vorhersehbares Stromprofil. Angriffe, die auf gleichartiges Verhalten, vergleichbare Stromkurven und präzises Alignment angewiesen sind, werden somit effektiv verhindert oder deutlich erschwert, da ein Angreifer aufgrund der zufälligen Wahl der verwendeten Multiplikationsverfahren nicht direkt zwei Berechnungen mit demselben Ablauf anstoßen kann. Ferner würde ein Angreifer, der aus einer gewissen Menge bereits durchgeführter Berechnungen solche herauszufinden sucht, die nach demselben Schema abgelaufen sind, an der großen Zahl möglicher Abläufe scheitern. Um überhaupt eine derartige Übereinstimmung zu finden, müsste der Angreifer in dem zu den Figuren 4A und 4B beschriebenen Beispiel näherungsweise $10^{100}$ Berechnungen durchführen, was nicht praktikabel ist. Dies beeinflusst insbesondere die Durchführbarkeit von DPA oder Template-Angriffen, wobei nicht nur die Anwendung von Templates gestört wird, sondern bereits deren Erstellung.

Ausführungsformen der vorliegenden Erfindung können somit zur Herstellung von sicheren Berechnungsmodulen vorgesehen sein, welche mit demselben Satz an Berechnungseinheiten mit unterschiedlichen Berechnungsverfahren ausgestattet sein können, beispielsweise Berechnungseinheiten, welche unterschiedliche Multiplikations- oder Potenzierungsverfahren implementieren. Da derselbe Satz an Berechnungseinheiten verwendet werden kann, können die Berechnungsmodule mit ein und demselben Maskensatz hergestellt werden. Hierdurch eignen sich die erfindungsgemäßen Module und Vorrichtungen für die Massenproduktion, beispielsweise als ASICs.

Es sollte verständlich sein, dass die vorliegende Erfindung weder auf eine konkrete Ausgestaltung eines elektronischen Moduls noch auf eine mathematische Operation oder entsprechende Berechnungsverfahren beschränkt ist. Vielmehr kann eine Vielzahl unterschiedlicher Berechnungseinheiten, welche jeweils andere Berechnungsverfahren für eine mathematische Operation implementieren, für eine abgesicherten Ausführung von verschiedenen mathematischen Operationen vorgesehen sein, welche die bei der mathematischen Operation verwendeten Daten wirksam vor Angriffen schützt, welche auf einer Analyse von Energieverbrauchsmessungen basieren.

Die in der vorstehenden Beschreibung, den Ansprüchen und Figuren offenbarten Merkmale können sowohl einzeln als auch in beliebiger Kombination für die Verwirklichung der Erfindung in ihren verschiedenen Ausführungsformen von Bedeutung sein.

**Patentansprüche**

1. Elektronisches Modul, umfassend:

   eine Vielzahl von Berechnungseinheiten (110a, ..., 110n) zur Berechnung einer mathematischen Operation für einen Satz von Parametern, wobei jede Berechnungseinheit eingerichtet ist, die mathematische Operation mit dem Satz von Parametern nach einem Berechnungsverfahren zu berechnen, und wobei sich das Berechnungsverfahren bei mindestens zwei Berechnungseinheiten aus der Vielzahl von Berechnungseinheiten (110a, ..., 110n) unterscheidet,
   **gekennzeichnet durch**:
   eine Auswahleinheit (108), welche eingerichtet ist, eine aus der Vielzahl von Berechnungseinheiten (110a, ..., 110n) zur Berechnung der mathematischen Operation auszuwählen.

2. Modul nach Anspruch 1, wobei jede Berechnungseinheit das jeweilige Berechnungsverfahren als eine Abfolge von einem oder mehreren Berechnungsschritten implementiert und wobei sich die Berechnungsverfahren der mindestens zwei Berechnungseinheiten in mindestens einem Berechnungsschritt unterscheiden.

3. Modul nach Anspruch 1 oder 2, wobei das elektronische Modul (100) eingerichtet ist, den Satz von Parametern an die ausgewählte Berechnungseinheit zu übergeben und ein von der ausgewählten Berechnungseinheit berechnetes Ergebnis der mathematischen Operation bereitzustellen.

4. Modul nach einem der vorhergehenden Ansprüche, wobei die Auswahleinheit (108) einen Zufallszahlengenerator oder einen Pseudozufallszahlengenerator aufweist und eingerichtet ist, die Berechnungseinheit randomisiert auszuwählen.

5. Modul nach einem der vorhergehenden Ansprüche, wobei die Auswahleinheit (108) eingerichtet ist, die Berechnungseinheit als Reaktion auf eine Eingabe eines Satzes von Parametern auszuwählen.

6. Modul nach einem der vorhergehenden Ansprüche, das eine Schnittstelle zur Auswahl mindestens einer Berechnungseinheit zur Berechnung der mathematischen Operation umfasst.

7. Modul nach einem der vorhergehenden Ansprüche, wobei mindestens ein Parameter aus dem Satz von Parametern in eine Vielzahl von Teilstücken zerlegt wird und die mathematische Operation auf jedem der Teilstücke rekursiv berechnet wird, um eine Vielzahl von Teilergebnissen zu erhalten, und wobei ein Ergebnis der mathematischen Operation, basierend auf der Vielzahl von Teilergebnissen, zusammengesetzt wird, wobei mindestens eine der Berechnungseinheiten den mindestens einen Parameter in die Vielzahl von Teilstücken zerlegt.

8. Modul nach Anspruch 7, wobei mindestens ein Teilergebnis von mindestens einer weiteren Berechnungseinheit aus der Vielzahl von Berechnungseinheiten (110a, ..., 110n), basierend auf mindestens einem der Teilstücke, berechnet wird, wobei die mindestens eine weitere Berechnungseinheit randomisiert ausgewählt wird.

9. Modul nach einem der vorhergehenden Ansprüche, wobei die mathematische Operation eine Multiplikation oder eine Potenz umfasst.

10. Modul nach einem der vorhergehenden Ansprüche, wobei die Berechnungsverfahren ausgewählt sind aus einem Karatsuba-Verfahren, einem Winograd-Verfahren, einem Montgomery-Verfahren oder einer klassischen teilproduktbasierten Multiplikation.

11. Modul nach einem der vorhergehenden Ansprüche, wobei die Berechnungseinheiten (110a, ..., 110n) Hardware-Einheiten sind, welche das jeweilige Berechnungsverfahren zumindest teilweise in Hardware implementieren, und/oder wobei das elektronische Modul (108) als ein einzelner Chip ausgeführt ist.

12. Kryptografiechip, der mindestens ein Modul nach einem der vorhergehenden Ansprüche umfasst.

13. Kryptografiechip nach Anspruch 12, der ein Chip für Elliptische-Kurven-Kryptografie (ECC) ist.

14. Verfahren zur Berechnung einer mathematischen Operation, umfassend:

Berechnen einer mathematischen Operation für einen Satz von Parametern mit einer Vielzahl von Berechnungseinheiten, wobei jede Berechnungseinheit eingerichtet ist, die mathematische Operation mit dem Satz von Parametern nach einem Berechnungsverfahren zu berechnen, und wobei sich das Berechnungsverfahren bei mindestens zwei Berechnungseinheiten aus der Vielzahl von Berechnungseinheiten unterscheidet; und Auswählen, durch eine Auswahleinheit, von einer aus der Vielzahl von Berechnungseinheiten zum Berechnen der mathematischen Operation.

15. Verfahren nach Anspruch 14, wobei das Auswählen randomisiert erfolgt und das Verfahren ferner ein Übergeben des Satzes von Parametern an die ausgewählte Berechnungseinheit und ein Bereitstellen eines von der ausgewählten Berechnungseinheit berechneten Ergebnisses der mathematischen Operation umfasst.

**EP 3 504 616 B1**

**Claims**

1. Electronic module, comprising:

   A plurality of computation units (110a, ., 110n) for computing a mathematical operation for a set of parameters, wherein each computation unit is designed to compute the mathematical operation with the set of parameters according to a computation method, and wherein the computation method differs in the case of at least two computation units from the plurality of computation units (110a, ., 110n),
   **characterized by**:
   a selection unit (108), which is designed to select one from the plurality of computation units (110a,...,110n) for the computation of the mathematical operation.

2. Module according to claim 1, wherein each computation unit implements the respective computation method as a sequence of one or more computation steps, and wherein the computation method of the at least two computation units differs in at least one computation step.

3. Module according to claim 1 or 2, wherein the electronic module (100) is designed to transfer the set of parameters to the selected computation unit, and to prepare a result of the mathematical operation calculated from the selected computation unit.

4. Module according to any one of the preceding claims, wherein the selection unit (108) comprises a random number generator or a pseudo-random number generator, and is designed to select the computation unit in a randomised manner.

5. Module according to any one of the preceding claims, wherein the selector unit (108) is designed to select the computation unit as a reaction to an input of a set of parameters.

6. Module according to any one of the preceding claims, which comprises an interface for selecting at least one computation unit for computing the mathematical operation.

7. Module according to any one of the preceding claims, wherein at least one parameter from the set of parameters is broken down into a plurality of part elements, and the mathematical operation is computed recursively on each of the part elements in order to obtain a plurality of part results, and wherein a result of the mathematical operation, based on the plurality of part results, is compiled, wherein at least one of the computation units breaks down the at least one parameter into the plurality of part elements.

8. Module according to claim 7, wherein at least one part result is computed from at least one further computation unit from the plurality of computation units (110a, ...., 110n), based on at least one of the part elements, wherein the at least one further computation unit is selected in a randomised manner.

9. Module according to any one of the preceding claims, wherein the mathematical operation comprises a multiplication or a power.

10. Module according to any one of the preceding claims, wherein the computation methods are selected from a Karatsuba method, a Winograd method, a Montgomery method, or a classic part-product based multiplication.

11. Module according to any one of the preceding claims, wherein the computation units (110a, ...., 110n) are hardware units, which implement the respective computation method at least partially in hardware, and/or wherein the electronic module (108) is configured as a single chip.

12. Cryptography chip which comprises at least one module according to any one of the preceding claims.

13. Cryptography chip according to claim 12, which is a chip for elliptic-curve cryptography (ECC).

14. Method for computing a mathematical operation, comprising:

    Computing of a mathematical operation for a set of parameters with a plurality of computation units, wherein each computation unit is designed to compute the mathematical operation with the set of parameters according

16

to a computation method, and wherein the computation method differs in the case of at least two computation units from the plurality of computation units; and

selection, by a selection unit, of one from the plurality of computation units for the computing of the mathematical operation.

**15.** Method according to claim 14, wherein the selection takes place in a randomised manner, and the method further comprises a transfer of the set of parameters to the selected computation unit and the preparation of a result of the mathematical operation calculated from the selected computation unit.

**Revendications**

**1.** Module électronique comprenant :

une pluralité d'unités de calcul (110a... 110n) pour le calcul d'une opération mathématique pour un ensemble de paramètres, dans lequel chaque unité de calcul est conçue pour calculer l'opération mathématique avec l'ensemble de paramètres selon un procédé de calcul et dans lequel le procédé de calcul est différent dans au moins deux unités de calcul de la pluralité d'unités de calcul (110a... 110n),
**caractérisé par** :
une unité de sélection (108) qui est conçue pour sélectionner une parmi la pluralité d'unités de calcul (110a... 110n) pour le calcul de l'opération mathématique.

**2.** Module selon la revendication 1, dans lequel chaque unité de calcul implémente le procédé de calcul correspondant comme une suite d'une ou plusieurs étapes de calcul et dans lequel les procédés de calcul des au moins deux unités de calcul se distinguent par au moins une étape de calcul.

**3.** Module selon la revendication 1 ou 2, dans lequel le module électronique (100) est conçu pour transférer l'ensemble de paramètres vers l'unité de calcul sélectionnée et pour mettre à disposition un résultat de l'opération mathématique calculé par l'unité de calcul sélectionnée.

**4.** Module selon l'une des revendications précédentes, dans lequel l'unité de sélection (108) comprend un générateur de nombres aléatoires ou un générateur de nombres pseudo-aléatoires et est conçue pour sélectionner l'unité de calcul de manière randomisée.

**5.** Module selon l'une des revendications précédentes, dans lequel l'unité de sélection (108) est conçue pour sélectionner l'unité de calcul en tant que réaction à une entrée d'un ensemble de paramètres.

**6.** Module selon l'une des revendications précédentes, qui comprend une interface pour la sélection d'au moins une unité de calcul pour le calcul de l'opération mathématique.

**7.** Module selon l'une des revendications précédentes, dans lequel au moins un paramètre de l'ensemble de paramètres est décomposé en une pluralité de parties et l'opération mathématique est calculée de manière récursive sur chacune des parties, afin d'obtenir une pluralité de résultats partiels et dans lequel un résultat de l'opération mathématique est assemblé sur la base de la pluralité de résultats partiels, dans lequel au moins une des unités de calcul décompose l'au moins en paramètre dans la pluralité de parties.

**8.** Module selon la revendication 7, dans lequel au moins un résultat partiel est calculé par au moins une autre unité de calcul de la pluralité d'unités de calcul (110a... 110n) sur la base d'au moins une des parties, dans lequel l'au moins une autre unité de calcul est sélectionnée de manière randomisée.

**9.** Module selon l'une des revendications précédentes, dans lequel l'opération mathématique comprend une multiplication ou une élévation à une puissance.

**10.** Module selon l'une des revendications précédentes, dans lequel les procédés de calcul sont sélectionnés à partir d'un procédé Karatsuba, d'un procédé Winograd, d'un procédé Montgomery ou d'une multiplication classique basée sur des produits partiels.

**11.** Module selon l'une des revendications précédentes, dans lequel les unités de calcul (110a... 110n) sont des unités matérielles qui implémentent le procédé de calcul correspondant au moins partiellement dans le hardware et/ou dans lequel le module électronique (108) est réalisé sous la forme d'une seule puce.

12. Puce de cryptographie qui comprend au moins un module selon l'une des revendications précédentes.

13. Puce de cryptographie selon la revendication 12, qui est une puce pour cryptographie à courbes elliptiques (ECC).

14. Procédé de calcul d'une opération mathématique comprenant :

le calcul d'une opération mathématique pour un ensemble de paramètres avec une pluralité d'unités de calcul, dans lequel chaque unité de calcul est conçue pour calculer l'opération mathématique avec l'ensemble de paramètres selon un procédé de calcul et dans lequel le procédé de calcul est différent dans au moins deux unités de calcul de la pluralité d'unités de calcul ; et
la sélection, par une unité de sélection, d'une unité de calcul de la pluralité d'unités de calcul pour le calcul de l'opération mathématique.

15. Procédé selon la revendication 14, dans lequel la sélection a lieu de manière randomisée et le procédé comprend en outre un transfert de l'ensemble de paramètres à l'unité de calcul sélectionnée et une mise à disposition d'un résultat de l'opération mathématique calculé par l'unité de calcul sélectionnée.

**FIG. 1**

**FIG. 2**

EP 3 504 616 B1

**FIG. 3A**

INPUT AUFTEILEN $\boxed{1.}$

$A = A_1|A_0, \quad B = B_1|B_0$

(KARATSUBA)

REKURSIONSFORMEL:

$$\textcircled{2}\cdot 2^{2m} + \left(\textcircled{3}-\textcircled{1}-\textcircled{2}\right)\cdot 2^{m} + \textcircled{1}$$

$A_0 \text{----------} B_0 \rightarrow \textcircled{1}$

$A_1 \text{----------} B_1 \rightarrow \textcircled{2}$

$A_0 + A_1 \text{----} B_0 + B_1 \rightarrow \textcircled{3}$

TEILSTÜCKE $\boxed{2.}$ SUMMIEREN

$\boxed{3.}$ TEILPRODUKTE BERECHNEN (IN DER REGEL REKURSIV)

$\boxed{4.}$ TEILPRODUKTE ZUSAMMENFÜGEN

ERGEBNIS: $AB = \ldots$

---

**FIG. 3B**

INPUT AUFTEILEN $\boxed{1.}$

$A = A_2|A_1|A_0, \quad B = B_2|B_1|B_0$

(WINOGRAD)

REKURSIONSFORMEL:

$$\textcircled{3}\cdot 2^{4m} + \left(\textcircled{6}-\textcircled{2}-\textcircled{3}\right)\cdot 2^{3m} + \left(\textcircled{5}-\textcircled{1}+\textcircled{2}-\textcircled{3}\right)\cdot 2^{2m} + \left(\textcircled{4}-\textcircled{1}-\textcircled{2}\right)\cdot 2^{m} + \textcircled{1}$$

$A_0 \text{----------} B_0 \rightarrow \textcircled{1}$

$A_1 \text{----------} B_1 \rightarrow \textcircled{2}$

$A_2 \text{----------} B_2 \rightarrow \textcircled{3}$

$A_0 + A_1 \text{----} B_0 + B_1 \rightarrow \textcircled{4}$

$A_0 + A_2 \text{----} B_0 + B_2 \rightarrow \textcircled{5}$

$A_1 + A_2 \text{----} B_1 + B_2 \rightarrow \textcircled{6}$

TEILSTÜCKE $\boxed{2.}$ SUMMIEREN

$\boxed{3.}$ TEILPRODUKTE BERECHNEN (IN DER REGEL REKURSIV)

$\boxed{4.}$ TEILPRODUKTE ZUSAMMENFÜGEN

ERGEBNIS: $AB = \ldots$

ERSATZBLATT (REGEL 26)

---

**FIG. 3C**

INPUT AUFTEILEN $\boxed{1.}$

$A = A_n|\ldots|A_1|A_0, \quad B = B_n|\ldots|B_1|B_0$

(KLASSISCH ($n$-BIT))

REKURSIONSFORMEL:

$$A_n B_n \cdot 2^{2n} + \left(A_{n-1} B_n + A_n B_{n-1}\right)\cdot 2^{2n-1} + \ldots + \left(A_0 B_1 + A_1 B_0\right)\cdot 2 + A_0 B_0$$

$A_0 \text{----------} B_0$

$\vdots \qquad\qquad \vdots$

$A_n \text{----------} B_n$

$\boxed{3.}$ TEILPRODUKTE BERECHNEN (IN DER REGEL MIT DEM UND-OPERATOR)

$\boxed{4.}$ TEILPRODUKTE ZUSAMMENFÜGEN

ERGEBNIS: $AB = \ldots$

REKURSIONSTIEFE 0

**FIG. 4A**

LEGENDE:

METHODE — RANDOMISIERTE AUSWAHL DES MULTIPLIKATIONSVERFAHRENS
KARATSUBA
WINOGRAD
KLASSISCHE MULTIPLIKATION

$A_i = \cdots$ — ZERLEGUNG DES INPUTS

$A_i + A_j = \cdots$ — SUMMEN DER EINZELTEILE

$\longrightarrow (n)$ — VERZWEIGUNGSPUNKT IN DIE NÄCHSTE REKURSIONSEBENE

---

$A = 011011,\qquad B = 001111$

KARATSUBA

REKURSIONSFORMEL:

$\boxed{2}\cdot 2^6 + \left(\boxed{3} - \boxed{1} - \boxed{2}\right)\cdot 2^3 + \boxed{1}$

$A_0 = 011 \qquad B_0 = 111 \;\to\; (1)$

$A_1 = 011 \qquad B_1 = 001 \;\to\; (2)$

$A_0 + A_1 = 110 \qquad B_0 + B_1 = 1000 \;\to\; (3)$

ERGEBNIS: $AB = 110010101$

---

REKURSIONSTIEFE 1

$(1)\quad A = 011 \qquad B = 111$

WINOGRAD

REKURSIONSFORMEL:

$\boxed{6}\cdot 2^4 + \left(\boxed{9} - \boxed{5} - \boxed{6}\right)\cdot 2^3 + \left(\boxed{8} - \boxed{4} + \boxed{5} - \boxed{6}\right)\cdot 2^2 + \left(\boxed{7} - \boxed{4} - \boxed{5}\right)\cdot 2 + \boxed{4}$

$A_0 = 1 \qquad B_0 = 1 \;\to\; (4)$

$A_1 = 1 \qquad B_1 = 1 \;\to\; (5)$

$A_2 = 0 \qquad B_2 = 1 \;\to\; (6)$

$A_0 + A_1 = 10 \qquad B_0 + B_1 = 10 \;\to\; (7)$

$A_0 + A_2 = 1 \qquad B_0 + B_2 = 10 \;\to\; (8)$

$A_1 + A_2 = 1 \qquad B_1 + B_2 = 10 \;\to\; (9)$

ERGEBNIS: $AB = 10101$

---

$(4)\quad A = 1 \qquad B = 1$

KLASSISCH 1-BIT

ERGEBNIS: $AB = 1$

$(5)\quad A = 1 \qquad B = 1$

KLASSISCH 1-BIT

ERGEBNIS: $AB = 1$

$(6)\quad A = 0 \qquad B = 1$

KLASSISCH 1-BIT

ERGEBNIS: $AB = 0$

---

$(7)\quad A = 10 \qquad B = 10$

KLASSISCH 2-BIT

$A_0 = 0 \qquad B_0 = 0$

$A_1 = 1 \qquad B_1 = 1$

ERGEBNIS: $AB = 100$

$(8)\quad A = 01 \qquad B = 10$

KLASSISCH 2-BIT

$A_0 = 1 \qquad B_0 = 0$

$A_1 = 0 \qquad B_1 = 1$

ERGEBNIS: $AB = 10$

$(9)\quad A = 01 \qquad B = 10$

KLASSISCH 2-BIT

$A_0 = 1 \qquad B_0 = 0$

$A_1 = 0 \qquad B_1 = 1$

ERGEBNIS: $AB = 10$

EP 3 504 616 B1

**FIG. 4B**

EP 3 504 616 B1

**(2)** $A = 0011,$ $B = 0001$

**KARATSUBA**

REKURSIONSFORMEL: $(11)\cdot 2^6 + ((12) - (10) - (11))\cdot 2^3 + (10)$

| | |
|---|---|
| $A_0 = 11$ | $B_0 = 01$ → (10) |
| $A_1 = 00$ | $B_1 = 00$ → (11) |
| $A_0 + A_1 = 11$ | $B_0 + B_1 = 01$ → (12) |

ERGEBNIS: $AB = 0011$

**(10)** REKURSIONSTIEFE 2
$A = 11$ $B = 01$
KLASSISCH 2-BIT
$A_0 = 1$ $B_0 = 1$
$A_1 = 1$ $B_1 = 0$
ERGEBNIS: $AB = 11$

**(11)** $A = 00$ $B = 00$
KLASSISCH 2-BIT
$A_0 = 0$ $B_0 = 0$
$A_1 = 0$ $B_1 = 0$
ERGEBNIS: $AB = 00$

**(12)** $A = 11$ $B = 01$
KLASSISCH 2-BIT
$A_0 = 1$ $B_0 = 1$
$A_1 = 1$ $B_1 = 0$
ERGEBNIS: $AB = 11$

**(3)** $A = 110$ $B = 1000$

**WINOGRAD**

REKURSIONSFORMEL: $(15)\cdot 2^8 + ((18) - (14) - (15))\cdot 2^6 + ((17) - (13) + (14) - (15))\cdot 2^4 + ((16) - (13) - (14))\cdot 2^2 + (13)$

| | |
|---|---|
| $A_0 = 10$ | $B_0 = 00$ → (13) |
| $A_1 = 01$ | $B_1 = 10$ → (14) |
| $A_2 = 00$ | $B_2 = 00$ → (15) |
| $A_0 + A_1 = 11$ | $B_0 + B_1 = 10$ → (16) |
| $A_0 + A_2 = 10$ | $B_0 + B_2 = 00$ → (17) |
| $A_1 + A_2 = 01$ | $B_1 + B_2 = 10$ → (18) |

ERGEBNIS: $AB = 110000$

**(13)** REKURSIONSTIEFE 2
$A = 10$ $B = 00$
KLASSISCH 2-BIT
$A_0 = 0$ $B_0 = 0$
$A_1 = 1$ $B_1 = 0$
ERGEBNIS: $AB = 00$

**(14)** $A = 01$ $B = 10$
KLASSISCH 2-BIT
$A_0 = 1$ $B_0 = 0$
$A_1 = 0$ $B_1 = 1$
ERGEBNIS: $AB = 10$

**(15)** $A = 00$ $B = 00$
KLASSISCH 2-BIT
$A_0 = 0$ $B_0 = 0$
$A_1 = 0$ $B_1 = 0$
ERGEBNIS: $AB = 00$

**(16)** $A = 11$ $B = 10$
KLASSISCH 2-BIT
$A_0 = 1$ $B_0 = 0$
$A_1 = 1$ $B_1 = 1$
ERGEBNIS: $AB = 110$

**(17)** $A = 10$ $B = 00$
KLASSISCH 2-BIT
$A_0 = 0$ $B_0 = 0$
$A_1 = 1$ $B_1 = 0$
ERGEBNIS: $AB = 00$

**(18)** $A = 01$ $B = 10$
KLASSISCH 2-BIT
$A_0 = 1$ $B_0 = 0$
$A_1 = 0$ $B_1 = 1$
ERGEBNIS: $AB = 10$

_500_

**FIG. 5**

ERSATZBLATT (REGEL 26)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012008780 A1

**In der Beschreibung aufgeführte Nicht-Patentliteratur**

- **CHRISTOPHE NEGRE ; JEAN-MARC ROBERT.** New Parallel Approaches for Scalar Multiplication in Elliptic Curves over Fields of Small Characteristics. *IEEE Transactions on Computers,* 2015, vol. 64 (10
- **ZHIMIN CHEN et al.** Using Virtual Secure Circuit to Protect Embedded Software from Side-Channel Attacks. *IEEE Transactions on Computers,* 2013, vol. 62 (1
- **ANATOLI ALEXEJEWITSCH KARATSUBA ; YU OFMAN.** Multiplication of Many-Digital Numbers by Automatic Computers. Doklady Akad. Nauk SSSR, 1962, vol. 145, 293-294
- **DANIEL V. BAILEY ; CHRISTOF PAAR.** Efficient arithmetic in finite field extensions with application in finite field cryptography. *Journal of Cryptology,* 2001, vol. 14 (3), 153-176

- **PETER L.** Montgomery: Five, Six, and Seven-Term Karatsuba-Like Formulae. *IEEE Transactions on Computers,* Marz 2005, vol. 54 (3
- **DANIEL M. GORDON.** A survey of fast exponentiation methods. *Journal of Algorithms,* 1997, vol. 27 (1), 129-146
- The Montgomery Powering Ladder. **MARC JOYE ; SUNG-MING YEN.** Lecture Notes in Computer Science. Springer, 2003, vol. 2523, 291-302
- **JAECHEOL HA et al.** Power Analysis Attacks on the Right-to-Left Square-Always Exponentiation Algorithm. *Journal of Internet Services and Information Security,* 2014, vol. 4 (4), 38-51